Europäisches Patentamt

**European Patent Office**

Office européen des brevets

(11) Publication number: **0 231 076 B1**

## EUROPEAN PATENT SPECIFICATION

(45) Date of publication of patent specification: **03.04.91**

(51) Int. Cl.5: **F16L 15/00, F16L 19/00, F16L 27/12**

(21) Application number: **87300295.0**

(22) Date of filing: **14.01.87**

(54) **Pipe union assembly.**

(30) Priority: **15.01.86 US 819948**
**13.03.86 US 839332**
**07.01.87 US 1331**

(43) Date of publication of application:
**05.08.87 Bulletin 87/32**

(45) Publication of the grant of the patent:
**03.04.91 Bulletin 91/14**

(84) Designated Contracting States:
**AT BE CH DE ES FR GB GR IT LI LU NL SE**

(56) References cited:
**FR-A- 2 141 536**
**US-A- 4 209 193**

(73) Proprietor: **HILTAP FITTINGS LTD.**
**301, 1204 Kensington Road, NW**
**Calgary Alberta T2N 3P5(CA)**

(72) Inventor: **Chapman, Donald A.**
**802 1100 8th Avenue, SW**
**Calgary Alberta, T2P 3T9(CA)**
Inventor: **Krywitsky, Lee A.**
**468 Woodside Road, SW.**
**Calgary Alberta, T2W 3JB(CA)**
Inventor: **Krywitsky, Leo L.**
**10 Yule Avenue**
**Toronto Ontario M6S 1E8(CA)**

(74) Representative: **Wharton, Peter Robert et al**
**Urquhart-Dykes & Lord Alliance House 29-31**
**Kirkgate**
**Bradford West Yorkshire, BD1 1QB(GB)**

## Description

The Field of the Invention

The present invention relates generally to fittings and couplers for use with pipes and hoses. More particularly, the present invention relates to pipe union assemblies which allow two pipes to be selectively joined together in, and released from, a sealing engagement such that the sealing engagement is maintained under extreme pressure and/or temperature conditions.

The Background Art

In many areas of modern industry, there is an urgent need for devices which allow two pipes to be repeatedly joined together while allowing for easy separation of the pipes. This need is especially urgent where the substances carried by the pipes are under extreme pressure and/or temperature conditions. The chemical, cryogenic, petroleum, and food processing fields are just some examples of industries having such needs.

Although many different devices have been developed in the prior art for joining pipes, such devices often require cumbersome tightening by unwieldy tools if very high presand/or high or low temperatures are involved. The various devices found in the prior art may be called connectors, fittings, unions, couplings, joints, or some other name, but they all serve the same function of joining two pipes. Furthermore, not only are many of these prior art devices unsuitable in some applications, most also pose a safety threat to the operating mechanic assigned to loosen the connective fitting when high pressure is involved.

One of the most common methods of joining two pipes involves a flange joint. When a flange joint is used, the ends of the pipes are provided with flanges extending beyond the outside diameter of the pipes. The flanges are provided with multiple bores through which bolts may be inserted and tightened using corresponding nuts.

Between the two flanges is placed a flat ring corresponding to the dimensions of the flanges and having bores placed in positions corresponding to the flange bore positions. When in place, the ring acts as a gasket. The flanges, with the ring located between the flanges, are joined together using the nuts and bolts inserted through the bores. The flanges may be provided with grooves to which the gasket conforms under pressure in order to provide an improved seal.

Use of the common "flange method" of joining two pipes has several disadvantages. First, it is generally cumbersome and quite difficult to join two pipes in this way, since many bolts and nuts are often required. It is important that all of the bolts be tightened equally. Thus, tightening several bolts and nuts can take a significant amount of time, and require the use of specialized wrenches and other tools. It will be appreciated that properly threading and tightening all the bolts and nuts on a flange joint can be a cumbersome task. The amount of time required to assemble or disassemble a flange joint can be a serious disadvantage in many applications. In many low-to-medium pressure situations, there has been a longfelt need for a pipe connector which can be hand tightened if desired.

Second, a flange joint may be very difficult to disassemble because of the complexity of its construction. Moreover, in many cases, a flange joint is subject to corrosion and aging of the flanges and ring gasket which also increases the difficulty of disassembly.

Third, a flange joint typically must be extremely "tight" in order to ensure that the joint does not leak when extremely cold, or extremely hot, fluid is introduced into the joint causing thermal contraction or expansion. If the flange joint is not very tight when assembled, then as very cold or hot fluids are introduced into the joint, the alternating expansion and contraction of the joint will cause the joint to loosen and leak.

Fourth, in addition to the difficulty accompanying disassembly of the common flange joint, the person disassembling the flange joint is exposed to potential harm if any residual pressure remains within the system to which the pipes were connected. As a result, personal injury may occur during disassembly of a common flange joint because the flange joint does not provide any way of releasing residual pressure from the connected pipes before being disassembled. If a method for releasing residual pressure is not provided, the person disassembling the joint faces the hazardous possibility that the joint will rapidly separate and release its contents during the disassembly procedure.

In an effort to overcome some of the above-mentioned difficulties, various devices have been suggested for use as pipe connectors.

One such pipe connector which has been developed is known as a GRAYLOC® connector. A GRAYLOC® connector uses two hubs, each hub being attached to an end of a pipe. The hubs are generally butt-welded to the pipes. A seal ring is placed between the two hubs and an external clamp is applied to the joint. In a GRAYLOC® connector, the clamp assembly surrounds the hubs and exerts pressure on the external circumference of the hubs causing the hubs to be pressed against the seal ring. The seal ring is formed such that a broad surface area is presented to the interior of the joint. This causes the internal pressure of the system to force the seal ring to expand circumferentially thus improving the seal.

While the GRAYLOC® connector is an improvement over the common flange joint, it is still relatively difficult to assemble and disassemble, since several bolts and nuts are required by the clamp. Moreover, there is no assurance that a joint assembled at room temperature will remain secure when exposed to extremely high and low temperatures.

Further, the seal ring may need to be replaced even after a single assembly procedure because of permanent deformation damage. The GRAYLOC® connector also provides little more protection to the person disassembling the joint from residual system pressure than does the common flange joint.

Another common method of joining two pipes is known as the hammer union. In a hammer union, a first portion of the connector is provided with male pipe threads on its outer surface with its inner diameter being provided with a smooth sloping tapered surface oriented at an angle in the range from about 40° to about 60°. A second portion of the connector is provided with a sloping tapered surface to complement that of the sloping tapered surface on the first portion.

The two tapered surfaces are mated together and an external rotating sleeve, with female threads, is slipped over the second portion of the pipe and threaded onto the male threads provided on the first portion of the connector. As the external sleeve of the hammer union is threaded onto the male threads, the tapered surfaces are pressed together to provide a seal.

In order to provide the tightest possible seal, the external sleeve, which is provided with ridges extending perpendicularly from its external circumference, are struck with a hammer in order to tighten the joint as much as possible. Thus, the name "hammer union."

The hammer union presents many of the same difficulties that are inherent in the "flange method" of joining two pipes, e.g. , difficult disassembly, frequent inability to reuse the connector, and no protection from residual pressure remaining in the pipe during disassembly. Recognizing that ease of assembly and disassembly is important in a pipe union, there have been attempts to provide a more easily assembled and disassembled pipe union.

One example of an attempt to provide a more easily assembled and disassembled pipe connector is known as a HANSEN® coupling. In a HANSEN® coupling, the male portion of the coupling is provided with a groove formed in its outer circumference and which is engaged by a retracting external sleeve that allows a plurality of releasably held ball bearings located in the female portion of the coupling to recede and thus allow the male portion to penetrate and make contact with the female portion. While the HANSEN® coupling has some advantages over other unions, the sealing function is provided by a flexible, rubber-like O-ring gasket which is unsuitable for use under extreme temperature or pressure conditions.

Another pipe connector which is an attempt to provide a more easily assembled and disassembled pipe union is known as a KAMLOCK™ connector. This connector, in a fashion similar to the HANSEN® coupling, has a male portion with a groove around its external circumference. A female portion of the connector is provided with two lever-operated cams which engage the grooves on the male portion when the male portion is inserted into the female portion.

The sealing function of the KAMLOCK™ connector is provided by a gasket of rubber-like material. Thus, as with the HANSEN® coupling, the use of a flexible gasket makes this connector unsuitable for use in high temperature or high pressure applications.

An improvement over the above mentioned devices is found in Canadian Patent No. 1,026,791, issued to Krywitsky. The pipe fittings disclosed in the Krywitsky patent are an improvement over the HANSEN® coupling and the KAMLO™ connector in that the sealing function is provided by a metal-to-metal interface which allows higher temperatures and pressures to be contained within the fitting than is possible when flexible, rubber-like gaskets are used.

The fitting disclosed in the Krywitsky patent uses two tubular members which are attached to pipes at one end and are provided with annular protrusions on the remaining end. An annular sealing ring with two opposing faces is provided with annular recesses on both of its faces. The annular recesses are defined by relatively thin and flexible lips. The tubular member protrusions are forced into the recesses which flex according to the degree of penetration of the protrusions. Furthermore, as the internal pressure of the fitting increases or decreases, the lips flex somewhat helping to maintain the sealing contact against the protrusion.

Use of the arrangement disclosed in the Krywitsky patent allows the pipe fitting to be used in applications involving either a constant high or low temperature, since the seal is formed by metal-to-metal contact. However, several difficulties are inherent in the design disclosed in the Krywitsky patent.

First, because the lips of the metallic sealing ring are relatively flexible, the maximum pressure which may be reliably contained is limited to about 2.76 Bar (40 pounds per square inch ("psi")).

Second, the fitting of the Krywitsky patent may become difficult to disassemble if the fitting lips "seize" onto the protrusion where the protrusion has been allowed to penetrate the recess too far. Such excessive penetration may be necessary to stop leaking at pressures near the maximum allowed for the device.

Third, the sealing ring of the device of the Krywitsky patent may fail or be subjected to damage due to fatigue caused by the flexing of the annular lips.

Fourth, as the annular lips flex, the contact area between the protrusion and the lips generally decreases. As the protrusion is forced deeper between the annular lips, the contact area diminishes to a very thin line around the protrusion. Once contact area has been reduced to such a "point contact," failure of the device may easily occur.

Fifth, as the sealing ring wears because of normal use, the protrusions may be allowed to completely penetrate to the bottom of the recesses while still not providing a sufficient seal to stop leaking.

Sixth, because the sealing ring is easily damaged and subject to rapid wear, the reusability of the pipe fitting is uncertain from one use to the next.

Seventh, it is nearly always is necessary to use tools to assemble or disassemble the fitting because of the pressure required to force the protrusion between the annular lips. The fact that tools must always be used decreases the usefulness of the connector. In many applications involving only moderate pressure, it would be very desirable to provide a connector which requires only hand tightening.

Thus, the pipe connector disclosed in the Krywitsky patent is useful over a limited range of pressures, and questions of reliability arise after the fitting has been properly used only a few times, or improperly used (e.g. , over-tightened), even once.

Another need which has been long unmet in the art is to provide an easily assembled, leak-free, aseptic pipe connector for use in food processing applications. In such food processing applications it is essential that if a leak should occur at the connector, contaminants from outside the connector not be allowed to enter the fluid stream.

None of the above-mentioned devices provides a pipe connector which may be easily assembled and disassembled and which also maintains a leak proof seal while the device is cycled through a wide range of temperatures and pressures. Further, none of the devices discussed above provide a pipe connector which provides adequate protection from injury to the operator due to rapid release of residual pressure contained in the system or which meets the needs of the food processing industry.

In view of the foregoing, it would be an advancement in the art to provide a pipe union assembly which may be used at very low temperatures and also at very high temperatures. It would also be an advancement to provide a pipe union assembly which maintains a fluid tight seal even when subjected to wide thermal cycles i.e. , subjected to temperatures that greatly vary from the ambient temperature at the time of assembly.

It would be another welcome advancement in the art to provide a pipe union assembly which may be easily assembled without requiring cumbersome tools and which may be hand tightened and still be cycled through temperatures and pressure changes without requiring subsequent adjustment.

It would also be an advancement in the art to provide a pipe union assembly which may be subjected to extreme internal pressures and still maintain a fluid-tight seal. Still another advancement would be to provide a pipe union incorporating a structure to allow release of residual pressure from the union without causing harm to the person disassembling the union.

Yet another advancement would be to provide an aseptic pipe union assembly. It would be another advancement in the art to provide a pipe union assembly which could be reused many times without repair or modification subsequent to each use.

US-A-4209 193 discloses a pipe union having a hollow fitting member with means at one end for attachment to a pipe and a tapered ridge at the other end, a hollow sealing means attachable to a pipe at one end and having a tapered channel at the other end, the channel receiving the ridge in sealing engagement. However the angle of orientation of the ridge and channel walls, the hardness differential between the ridge and channel walls, and the rigidity of the ridge channel walls are not chosen within the perimeters of the present invention so as to lead to the above advantages.

## BRIEF SUMMARY AND OBJECTS OF THE INVENTION

According to the present invention there is provided a pipe unit assembly comprising:

a hollow fitting member having means for attaching the fitting member at a first end thereof to a pipe member; an annular tapered ridge extending from a second end of the fitting member having two opposing flat sides, each of said sides being oriented at an angle in the range of from about 2° to about 12° with respect to a central axis of the fitting member; a hollow ridge sealing means having means for attaching the rigid sealing means at a first end thereof to a pipe member; an annular tapered channel configured to complement the shape of the ridge and formed at a second end of the sealing means, the tapered channel receiving the tapered ridge of the fitting member in sealing engagement and being defined by two flat tapered walls said walls being oriented with respect to a central axis (C) of the sealing means at an angle which is equal to the angle at the central axis of the fitting member; the tapered ridge sides being fabricated from a material having a Brinell hardness value in the range from about 1 Brinell unit to about 300 Brinell units different that the Brinell hardness value of the material from which the tapered channel walls are fabricated, the Brinell units being measured on the Brinell hardness scale, and the ridge being configured so that it cannot completely penetrate the tapered channel; and the rigid sealing means being sufficiently rigid such that the sealing means substantially retains its original configuration when the tapered channel receives the tapered ridge.

Preferably the assembly further comprises means for selectively securing the tapered ridge (118 A,B) in sealing engagement with the tapered channel (228 A,B) or releasing the tapered ridge and the tapered channel from sealing engagement.

In one preferred embodiment of the present invention, materials are chosen which have thermal expansion coefficients which will cause the sealing engagement between the sides of the tapered ridge and the walls of the rigid sealing member to be maintained, or increased, as the temperature of the materials changes from the ambient assembly temperature. In another preferred embodiment, a compensating washer is provided to compensate for the decrease in sealing engagement which might otherwise be experienced when the assembly is subjected to temperatures much lower than the ambient assembly temperature.

By proper selection of the thermal expansion coefficients of the materials and inclusion of the compensating washer, a pipe union assembly is provided which is capable of maintaining a secure seal when subjected to thermal cycling, i.e., subjected to temperatures that vary greatly from the ambient assembly temperature. This advantage is in addition to the pipe union being well suited for use at either a constant high or low temperature.

In yet another preferred embodiment, a restraining means is provided to ensure that the union may be disassembled safely even though residual pressure remains in the system.

The assembly of the present invention may be used at both very low temperatures and at very high temperatures, and the assembly maintains a fluid tight seal when subjected to thermal cycling i.e., subjected to temperatures well above and/or below the ambient assembly temperature.

The assembly preferably maintains a fluid-tight seal when subjected to internal pressure ranging from at least well below atmospheric pressure to very high pressures, and may be easily and rapidly assembled or disassembled without the use of cumbersome tools and which has a self aligning sealing member.

Conveniently, the assembly may be hand tightened for normal operation and maintains a fluid-tight seal without subsequent adjustment after assembly even though subjected to widely varying extremes of both temperature and pressure.

The assembly may be reused many times without repair or modification subsequent to each use.

These and other objects and features of the present invention will become more full apparent from the following description and appended claims taken in conjunction with the accompanying drawings.

## BRIEF DESCRIPTION OF THE DRAWINGS

Figure 1 is a partially cutaway perspective view of a first presently preferred embodiment of the present invention.

Figure 2 is an elevated cross-sectional view of the embodiment of Figure 1 taken along line 2-2 of Figure 1.

Figure 3 is an enlarged view of the portion of Figure 2 shown circled by the line 3-3 of Figure 2.

Figure 4 is an exploded perspective view of the rigid sealing member and the two fitting members of one presently preferred embodiment of Figure 1.

Figure 5 is a perspective view of one presently preferred embodiment of the compensating washer of the present invention.

Figure 6 is a perspective view of the embodiment of Figure 1 completely assembled.

5

Figure 7 is a partially cutaway elevated view of the embodiment of Figure 6.

Figure 8 is a partially cutaway perspective view of a second presently preferred embodiment of the present invention which is similar to the embodiment illustrated in Figure 1 but which utilizes only a single external sleeve.

Figure 9 is a partially cutaway perspective view of a third presently preferred embodiment of the present invention.

Figure 10 is an exploded perspective view of the embodiment shown in Figure 9.

Figure 11 is an elevated cross-sectional view of the embodiment shown in Figure 9.

Figure 12 is an elevated cross-sectional view of a fourth presently preferred embodiment of the present invention which is similar to the embodiment shown in Figure 9 with some structural modifications and additions.

Figure 13 is a perspective view of a presently preferred embodiment of a sealing ring used in accordance with the present invention.

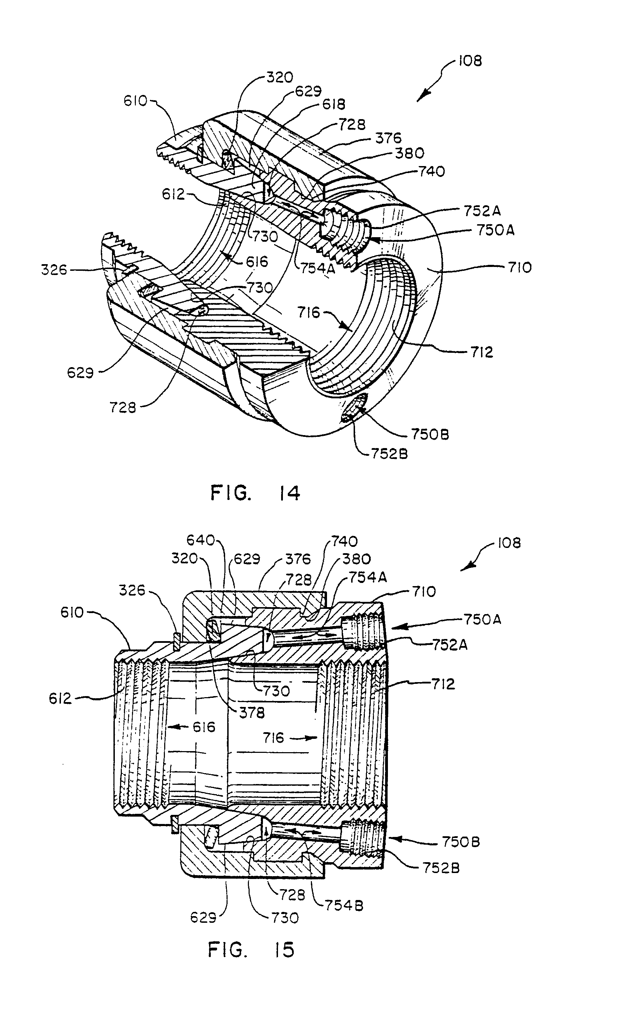

Figure 14 is a partially cutaway perspective view of a fifth presently preferred embodiment of the present invention which has particular application in the food processing industry.

Figure 15 is an elevated cross-sectional view of the embodiment of Figure 14 taken along line 15-15 of Figure 14.

## DETAILED DESCRIPTION OF THE PREFERRED EMBODIMENTS

Reference will now be made to the drawings wherein like parts are designated with like numerals throughout. Additionally, parts serving similar functions on the various embodiments will be similarly numbered, e.g. , 110, 410, and 610.

### A. A First Presently Preferred Embodiment

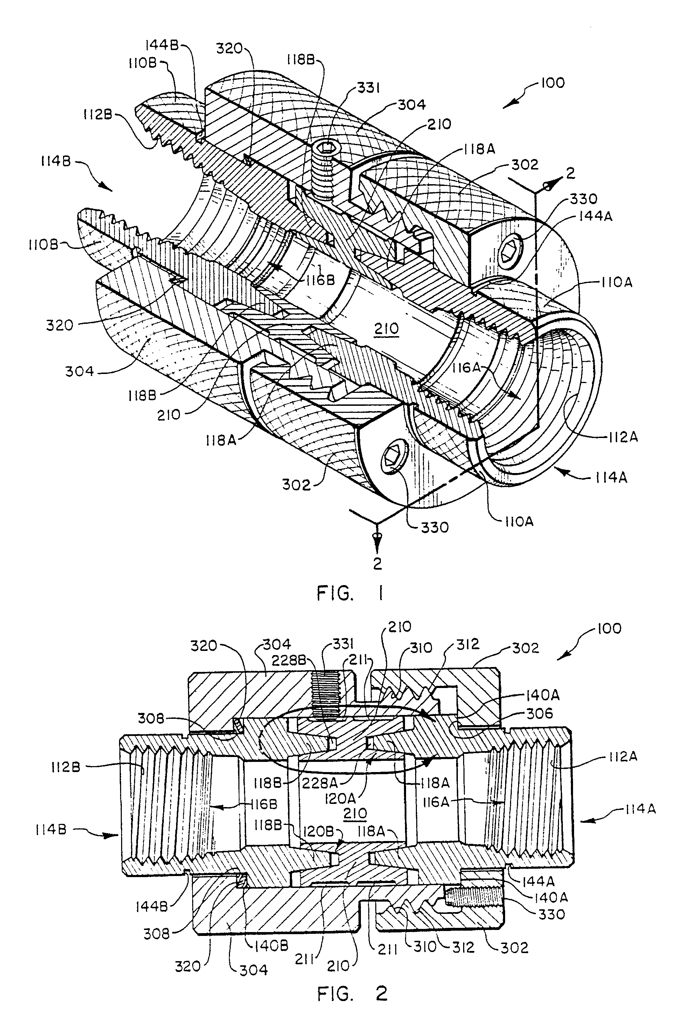

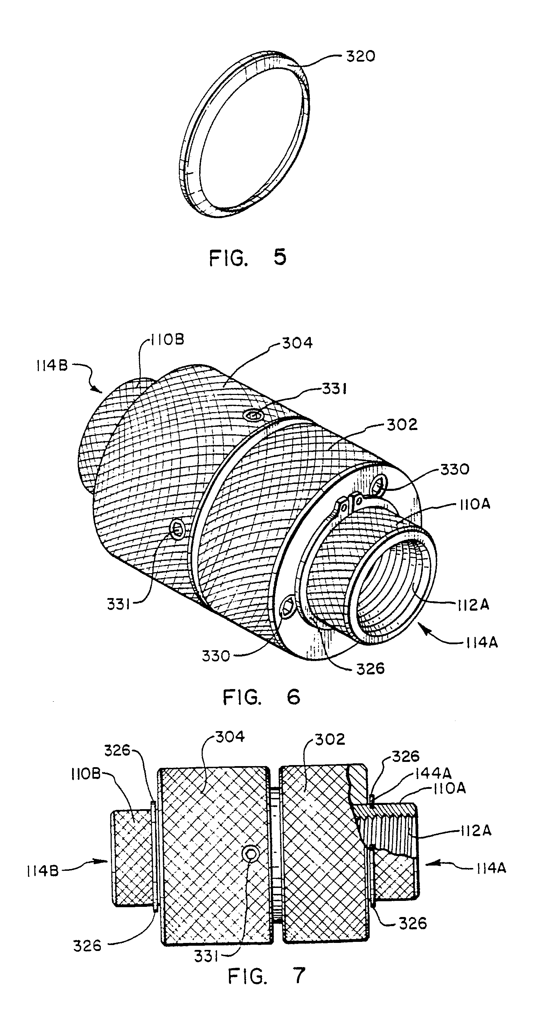

Referring first to Figure 1, a partially cutaway view of one presently preferred embodiment of the present invention is shown. This embodiment, generally designated 100 in Figure 1, includes two hollow fitting members 110A and 110B, a hollow sealing member or sealing ferrule 210, two external sleeves 302 and 304 which are shown threaded together, a compensating washer 320 (shown in more detail in Figure 5), and restraining clips 326, also sometimes referred to as safety clips 326 (shown in Figures 6 and 7). Restraining clips 326 are received by restraining clip grooves 144A and 144B, shown best in Figures 1 and 2.

In order to simplify the description of this embodiment, the structures associated with fitting members 110A and 110B have been assigned reference numerals from 110 to 144 and also an appropriate A or B letter which corresponds to fitting member 110A and fitting member 110B, respectively. Those structures associated with sealing member 210 have been assigned reference numerals from 210 to 230, and in some cases are also designated by an appropriate A or B letter if the structure is particularly associated with fitting member 110A or 110B.

As seen in Figure 1, fitting members 110A and 110B are cylindrically shaped with threads 112A or 112B formed around the inside of their outermost ends; these outermost ends are generally designated 114A and 114B in Figure 1. The diameter of fitting members 110A and 110B may be identical where pipes of identical diameter are to be joined, or may be dissimilar in order to facilitate interfacing with pipes of different sizes or shapes as will be explained hereinafter.

It should be understood that, as used herein, the term "pipe" is meant to include hoses, tubing, and any other conduit-like structure used to carry a fluid. Since in the embodiments shown in Figures 1-7 fitting members 110A and 110B are identical, the following description will only make reference to fitting member 110A and its associated structures with the understanding that the same disclosure also relates to fitting member 110B and its associated structures.

The interior cavity, generally indicated at 116A in Figure 1, of fitting member 110A is shown as being cylindrical; however, interior cavity 116A and fitting member 110A may also take on other configurations. For example, elliptical or rectangular shaped cavities 116A may be used according to the needs of the particular application.

While the embodiment shown in Figures 1-7 is intended to be attached to a pipe by threading female threaded portion 112A onto a male threaded portion of the pipe (not shown), other methods for joining each fitting member to a pipe member may be used. Besides the pipe threads as shown in Figures 1-2 and 6-7, other possible methods include high pressure acme threads, butt welding, or other methods well known in the art.

Whatever method is used to attach a pipe member to fitting member II0A, the seal formed by the connection must have sufficient strength to ensure that the connection will not leak or deteriorate when used at the expected operating temperatures and pressures. In addition, the seal must also be resistant to the fluid (which in some cases may be corrosive) passed through the pipe union assembly.

The pipe member may be rigidly or even permanently joined to fitting member II0A, since the need to disassemble the pipe member from fitting member II0A is avoided when using the present invention. Thus, the connection between the pipe member and fitting member II0A may be made by welding to provide additional strength and further prevent leakage.

Furthermore, the present invention makes interfacing of pipes, tubing, and hoses of different size, shape, and material much simpler than prior art methods. Since fitting member II0A may be easily adapted to accept these different pipes, tubing, or hoses at its outermost end II4A, as indicated in Figures I and 2, the remainder of its structure may be fabricated to a standard size. Thus, the present invention greatly facilitates the joining of dissimilar pipes without affecting the compatibility of the interface between fitting member II0A and sealing member 2I0.

The material used to fabricate fitting member II0A must be carefully chosen in accordance with four criteria. These criteria for selection of the material are: (I) the material must exhibit sufficient strength so as to not be adversely effected when subjected to the temperatures and pressures of the expected operating conditions; (2) the material must be resistant to any corrosive action of the fluid introduced therethrough; (3) the material must have an appropriate thermal expansion coefficient, as discussed below, and (4) the material must have an appropriate hardness, as discussed below.

Fitting member II0A, as shown in Figures I and 2, may be fabricated from various metals, e.g. , carbon steel or stainless steel, which exhibit characteristics suitable for the desired application. In this disclosure, the hardness of various materials will generally be referenced to the industry standard Brinell hardness scale (generally referenced as "HB = ").

As will be appreciated by those skilled in the art of metallurgy, the Brinell hardness number is obtained by indenting the surface of the metal with a hardened steel ball under a load and measuring the average diameter of the impression by visual observation through a microscope. The measurements provided herein were obtained using Brinell type hardness tester and applying a 3000 Kg load. Using the Brinell hardness number, it is possible to determine the equivalent hardness number on other common hardness scales including the Rockwell, Vickers, and Shore scales by methods well-known in the art.

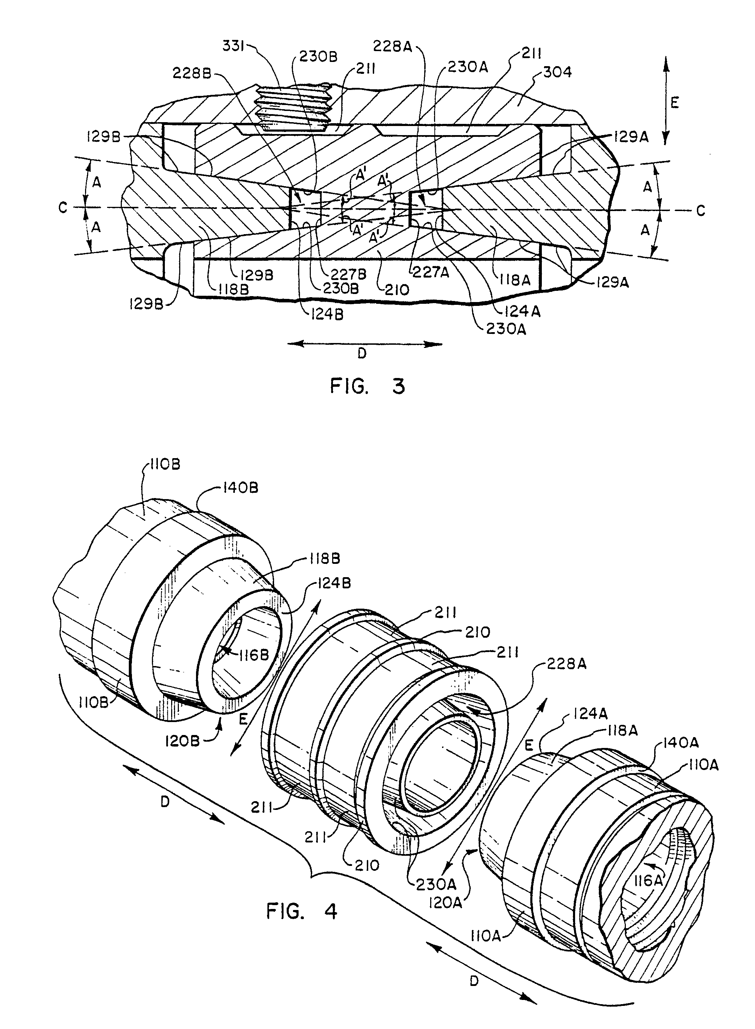

As can be seen best in Figure 4, each of fitting members II0A and II0B has a corresponding perimetric tapered ridge II8A and II8B, respectively, at the corresponding innermost end I20A and I20B, respectively, of the corresponding fitting members. The term "perimetric" is adopted herewith to describe tapered ridge II8A and tapered channel 228A since ridge I88A and 230 are disposed around the perimeter of the interior cavity formed within fitting member II0A. Thus, perimetric tapered ridge II8A peripherally defines the opening of cavity II6A formed through fitting member II0A.

Sealing member 2I0, also referred to as ferrule 2I0, is provided with two perimetric tapered channels, generally designated 228A (see Figures 2, 3, and 4) and 228B (see Figures 2 and 3), each configured to receive its corresponding perimetric tapered ridge II8A and II8B. Advantageously, sealing member 2I0 of the present invention is self aligning in that once tapered ridge II8A is inserted into tapered channel 228A, no further positioning of sealing member 2I0 is required by the person assembling the union.

Ferrule 2I0 is preferably shaped so as to match the shape of interior cavity II6A and the exterior shape of fitting member II0A. Thus, if fitting member II0A is cylindrical, as shown the figures, the shape of ferrule 2I0 is preferably also cylindrical.

Figure 3 shows the detail of tapered ridge sides I29A which are preferably smooth, flat, machined surfaces, and which are oriented at an angle A to the central axis of fitting member II0A. In Figure 3, the broken line marked C represents the central axis of fitting members II0A and II0B and ferrule 2I0.

It is preferred that tapered ridge sides I29A, and tapered channel walls 230A, be precisely machined to a 32 finish or better. Those skilled in the art of machining metals will appreciate that the designation "32 finish" indicates that the arithmetic mean of the departures from an ideally flat surface is equal to only 32 micro-inches. Thus, while a very flat surface may be difficult to obtain, it is generally desirable that tapered ridge sides I29A be as flat as possible. However, as will be explained later in connection with the hardness of the materials used in the embodiment, a surface finish less precise than a 32 finish may be used in some applications.

Angle A may be within the range from about $2°$ to about $12°$. However, angle A is preferably in the range of from about $5°$ to about $9°$ and is most preferably in the range from about $6°$ to about $8°$ in the embodiment shown in Figure 3. If angle A is too great, for example greater than $12°$, it may be difficult to obtain the maximum possible sealing. Generally, as angle A increases, so must the pressure exerted on the fitting members to urge them toward the sealing member in order to maintain a secure seal.

If angle A is too shallow, for example less than $2°$, damage to ridge sides 129A and channel walls 230A may occur making it difficult to disassemble and reuse the union. Such damage occurs because a bond similar to a "cold weld" may occur between tapered ridge sides 129A and tapered channel walls 230A which may result in galling.

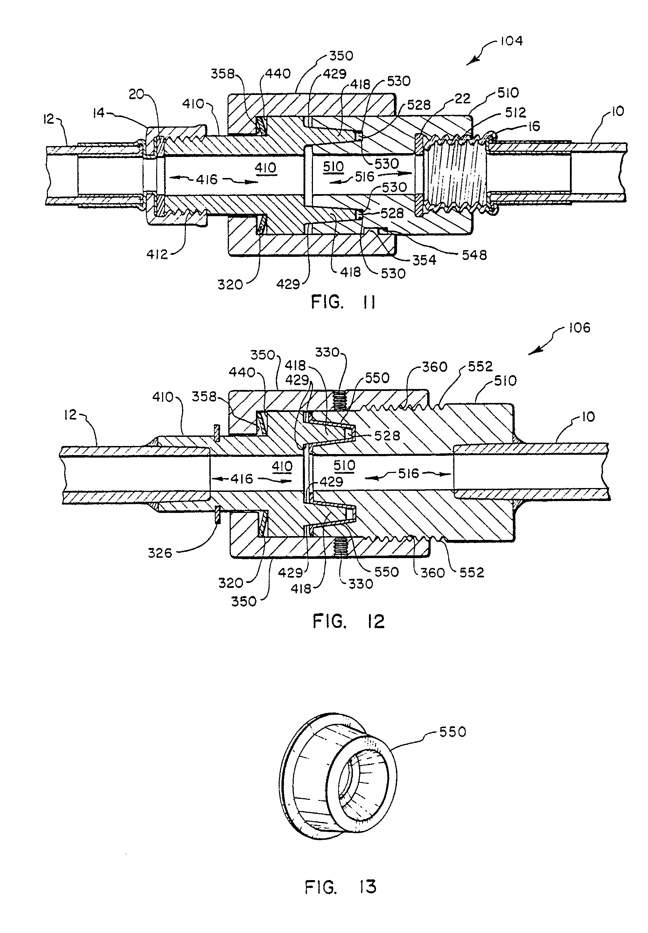

It should be appreciated that using angles less than $5°$ will often result in a more secure seal, but such angles will also potentially result in an embodiment which may be reused fewer times and may also be difficult to disassemble. However, if the feature of providing a secure seal is paramount to providing a reusable pipe union, angles less than $5°$ may be used. Also, using an embodiment such as that illustrated in Figures 12 and 13 utilizing an easily replaceable sealing ring, allows the softer sealing ring to be discarded if it becomes damaged due to galling.

Conversely, the use of angles greater than $9°$ may potentially result in a less secure seal but may also result in an embodiment which may be used a greater number of times. In some applications one or the other consideration may be paramount. An angle in the range from $6°$ to about $8°$ has been found to be most preferable for most applications.

Also, for maximum sealing in the embodiments of the present invention, the mating surfaces, ridge sides 129A, and channel walls 230A in Figure 3 should be formed to tolerances which are as close as possible. For example, a tolerance of ±1 minute (1/60 of a degree) is desirable. However, if possible, a tolerance within several seconds is more preferable. The distal end 124A of ridge 118A is preferably straight and flat as shown in Figure 3.

Thus, when fabricating tapered ridge sides 129A and tapered channel 230A, it is necessary to consider the angle of the surfaces, the acceptable deviation, i.e. , tolerance, from the chosen angle, and the surface roughness of the surfaces. It should be appreciated that if maximum sealing is to be obtained careful attention must be paid to these considerations. However, if the embodiment is to be used in less demanding applications, less attention needs to be paid to these considerations.

The perimetric tapered channels, generally designated 228A and 228B in Figures 2, 3 and 4, located on opposite faces of ferrule 210, are each provided with two flat walls 230A and 230B respectively, as shown best in Figure 3. Channel bottoms 227A and 227B are preferably smooth and flat. In the following discussion, only the side of ferrule 210 associated with fitting member 110A will be described, with the understanding that the other side of ferrule 210 associated with the structure of fitting member 110B is symmetrically identical.

The angle at which channel walls 230A are oriented with respect to axis C is designated $A'$ in Figure 3. The angle $A'$ must match the angle A of tapered ridge sides 129A within very close tolerances for proper sealing contact and engagement to occur. Thus, as explained earlier, both angles A and $A'$ should be within the range of about $2°$ to about $12°$, with the range from about $5°$ to about $9°$ being-preferable and the range from about $6°$ to about $8°$ being most presently preferred.

As shown best in Figure 3, tapered ridge 118A is configured so that the end thereof cannot come into contact with channel bottom 227A. Thus, the narrowest portion of tapered ridge 118A should not be as narrow as the narrowest portion of channel 228A.

Due to the foregoing structure, tapered ridge 118A cannot completely penetrate perimetric channel 228A. However, since the angle $A'$ of channel walls 230A and the angle A of ridge sides 129A are essentially identical, a very precise mating occurs between channel walls 230A and tapered ridge sides 129A.

By providing ridge 118A and channel 228A with tapered surfaces, greater surface area is provided which allows an improved sealing engagement without increasing the diameter of the embodiment as is required, for example, to increase the sealing surface area when using a common flange joint.

Furthermore, use of a tapered ridge 118A and a tapered channel 228A advantageously allows greater pressure to be applied to the ridge/channel sealing surfaces. Use of the tapered structures allows relatively high pressures to be exerted without resorting to tools when assembling the pipe union of the present invention. Since sufficient sealing for some applications occurs by tightening the embodiments by hand, tools are often not needed during assembly or disassembly. However, it may be desirable with some embodiments to use a wrench while assembling the union, or to include handles on the external sleeves of the embodiment.

In contrast to the "reusable" pipe fittings found in the background art, the present invention achieves a seal by making use of planar sealing surfaces, comprised of tapered ridge sides 129A and tapered channel walls 130A. The fittings found in the background art typically rely on a point or linear contact to effect a seal. By making use of planar sealing surfaces, the present invention is much less affected by imperfections in the sealing surfaces as well as having the other advantages mentioned herein.

Importantly, sealing ferrule 210 should be fabricated of a material which has characteristics which will allow it to remain rigid even under the pressure exerted by the insertion of tapered ridge II8A into tapered channel 228A. It should be appreciated that the term "rigid" as used herein is intended to mean that no substantial macroscopic changes occur.

Furthermore, it is preferable that no macroscopic changes occur in either fitting member II0A or sealing member 210 after proper assembly of the union. However, it is desirable in some cases that a microscopic change occur at the mating surfaces of ridge sides I92A and channel walls I30A as will be explained hereinafter.

As stated earlier, there are also other considerations which should be given careful attention when choosing a material from which to fabricate ferrule 210 and fitting members II0A and II0B. Primarily, these considerations are the thermal expansion characteristics of the material and the hardness of the material. In one preferred embodiment, ferrule 210 is fabricated from aluminum type 7075 and fitting members II0A and II0B are made from stainless steel type 304.

Aluminum 7075 possesses a surface hardness II5 Brinell units softer than stainless steel 304. Also, the coefficient of thermal expansion of aluminum 7075 is $7.4 \times 10^{-6}$ meters/meter ● °C greater than the coefficient of thermal expansion of stainless steel 304. Both aluminum 7075 and stainless steel 304 are relatively easy to machine to close tolerances. These and other attributes of these materials make them very suitable for a general purpose pipe union assembly according to the present invention. The particular importance played by the coefficient of thermal expansion exhibited by the material is explained below.

It is often the case that the present invention will be assembled at an ambient temperature which may range from -50°C to +50°C in some industrial environments as well as in some harsh naturally occurring environments. While some background art devices mentioned earlier would have difficulty manitaining any adequate seal at a temperatures of -50°C, none of the known "reusable" devices is able to maintain a secure seal as the temperature of the fitting is significantly elevated above, or reduced below, the "ambient assembly temperature."

Still further, the challenge of maintaining a secure seal is increased when the fitting is subjected to repeated thermal cycling. For example, the pipe union assembly of the present invention may be used at an oil extraction facility near the arctic circle. In the winter, such assemblies may be assembled at temperatures as low as -50°C and then experience a temperature rise of more that 400°C, and pressures above 138 Bar (2,000 psi) when steam is passed through the assembly. Alternatively, in other applications the ambient assembly temperature may be 25°C but then drop into the cryogenic regions as liquid nitrogen at lower than -190°C is introduced into the assembly.

As the temperature of the pipe union assembly of the present invention varies due to either changing ambient conditions or the temperature of the fluid introduced into the pipe union assembly, the components of the union will undergo thermal expansion or contraction. The case of thermal expansion or thermal contraction, whichever is to be expected, must be considered when designing a pipe union assembly which will be used over greatly varying temperature conditions.

As can be appreciated by examining the structure shown in Figure 3, rather than incorporating a single sealing surface, two sealing surfaces are provided on each tapered ridge II8A and tapered channel 228A. Each tapered ridge II8A is provided with two identical sides I29A and each tapered channel 228A is provided with two identical walls 230A.

Since one of each of these sides makes sealing contact with a corresponding wall, two sealing surfaces are created by each tapered ridge II8A and tapered channel 228A pair. In addition to such attributes as the earlier mentioned planar sealing surfaces, the redundancy of sealing surfaces is an additional characteristic which allows the present invention to provide a seal which is more secure than that provided by previously available devices.

The two sealing surfaces will be referred to as the inner sealing surface, comprising ridge side I29A and channel wall 230A which are nearest the inner cavity of the embodiment, and the outer sealing surface, comprising ridge side I29A and channel wall 230A which are nearest the exterior of the embodiment. Ideally, the inner sealing surface will maintain a seal to keep the fluid within the assembly. If the inner sealing surface fails to do so, the outer sealing surface will retain any fluid escaping into channel 228A.

It is desirable, however, that the inner sealing surface be securely maintained because once fluid escapes into channel 228A, the additional pressure in channel 228A will tend to push ridge II8A out of channel 228A which may increase the possibility of the outer sealing surface also failing. Because of the above-explained considerations, if a seal is to be maintained at maximum pressure and at a maximum temperature difference, the below described attributes must be incorporated into the embodiment.

As the temperature of the assembly increases there is generally an accompanying increase in the pressure internal to the union. Thus, as temperature and/or pressure increases it is important that the seal provided by the mating of channel walls 230A and ridge sides 129A be maintained or improved. This consideration is met by carefully selecting the material from which ferrule 210 and fitting member 110A are fabricated so as to meet the strength, rigidity, hardness and thermal expansion characteristics that are required by the particular application.

Importantly, when an embodiment of the present invention must maintain a high pressure seal over a wide range of temperatures the thermal expansion coefficient of the material from which fitting member 110A is fabricated must be different than the thermal expansion coefficient of the material from which ferrule 210 is fabricated.

Referring now to Figure 4, when the "operating temperature" will be significantly greater than the ambient assembly temperature, fitting member 110A should preferably exhibit a higher thermal expansion coefficient than ferrule 210. Then, as both are subjected to the same elevated temperature, fitting member 110A will expand to a greater extent than ferrule 210. Importantly, fitting member 110A will expand both axially, along line D of Figures 3 and 4, and radially, along line E of Figures 3 and 4. Also, the width of tapered ridge 118A will also expand to a greater extent than tapered channel 230A. Thus, as tapered ridge 118A expands in the directions indicated by lines D and E, the pressure exerted upon the interface at channel walls 230A and ridge sides 129A is increased resulting in an improved seal.

When the operating temperature of the assembly will be significantly less than the ambient assembly temperature, sealing member 210 should preferably exhibit a higher thermal expansion coefficient than fitting member 110A. Thus, rather than expanding as just explained, sealing member 210 will contract to a greater extent than fitting member 110A along lines D and E shown in Figure 4. In order to provide the most secure seal when the operating temperature will be lower than the ambient assembly temperature, an additional structure, a compensating washer 320 illustrated in Figure 5, is included. (The use and selection of the compensating washer will be explained in detail below).

The second primary consideration is the hardness of the material of both tapered ridge sides 129A and channel walls 230A. Table I provides a list of representative materials which may have application in the present invention. The values provided in Table I were taken from the ASM Metals Reference Book (2d ed. 1983).

It will be appreciated that the values given for both the hardness and the thermal coefficient of expansion are subject to measurement errors and will vary slightly with temperature. However, the values provided, which assume a temperature of about 25° C, are useful since the difference in values between two metals will remain qualitatively the same as the temperature varies.

## TABLE 1

| METAL | BRINELL HARDNESS | COEFFICIENT OF LINEAR THERMAL EXPANSION M•°C |
|---|---|---|
| CARBON STEEL | | |
| 1018 | 111 | $11.8 \times 10^{-6}$M |
| 1020 | 111 | 11.7 |
| 1040 | 201 | 12.0 |
| 1040 | 514 (Heat treated) | 12.0 |
| 4140 | 302 | 12.7 |
| 5160 | 627 | 12.6 |
| STAINLESS STEEL | | |
| 303 | 175 | 17.2 |
| 304 | 175 | 17.2 |
| ALUMINUM | | |
| 2011T3 | 95 | 22.6 |
| 2024 | 120 | 22.7 |
| 6061 | 65 | 24.3 |
| 7075 | 60 | 24.6 |
| ZINC (PLATED) | 76 | 27.4 |
| COPPER (PLATED) | 44 | 16.5 |

In order to provide the most secure seal possible at the channel ridge interface, channel walls 230A and ridge sides 129A are fabricated of materials which differ in their hardness. In the embodiment shown in Figure 3, channel walls 230A are fabricated from a material softer than tapered ridge sides 129A. Alternatively, tapered ridge sides 129A could be of a material softer than channel walls 230A.

Fabricating sealing member 210 from the softer material is presently preferred. While embodiments of the present invention may be used many times when properly assembled, should replacement of a part become necessary, it is desirable that the replaced part be ferrule 210. As explained earlier, fitting member 110A will often be permanently attached to a pipe member. Thus, fitting member 110A may be difficult to replace while ferrule 210 is easy to replace. By making ferrule 210 of a softer material, ferrule 210, rather than fitting member 110A, will be the component to incur damage due to improper use or wear.

It should be appreciated that the proper "hardness differential" may be accomplished either by fabricating the entire ferrule 210 or fitting member 110A of a material having the appropriate hardness, or channel walls 230A and ridge sides 129A may be plated or coated with appropriate materials such as zinc or copper as listed in Table I.

Using the Brinell hardness scale, it has been found that the material used in ferrule channel walls 230A should have a difference in hardness in the range of about HB = 1 to about HB = 300 when compared to the material used for tapered ridge sides 129A. Desirable results are also obtained when the hardness differential between the two materials is limited to within the range of from about HB = 5 to about HB = 200. However, in many applications a range of from HB = 10 to about HB = 150 will be most preferred.

As will be appreciated by those skilled in the art, as the hardness of a metal increases, the difficulty of precisely machining the metal also increases. Still, in some high temperature and high pressure environments it may be desirable to use very hard metals with or without additional materials plated on the tapered ridge sides or the tapered channel walls. A general purpose pipe union assembly may have the entire fitting member 110A, including ridges 129A, fabricated of carbon steel type 1040, while ferrule 210 may have a body fabricated of carbon steel type 1020.

As stated earlier, ridge sides 129A and channel walls 230A are preferably formed to a 32 finish or better. In addition to the previously discussed reasons, due to the fact that it is nearly impossible, and commercially impractical, to form ridge sides 129A and channel walls 230A to eliminate all surface roughness, it is necessary to use metals of differing hardness. Since even after precise machining minute imperfections remain in the surface of ridge sides 129A and channel walls 230A, the use of metals having differing hardnesses allows the softer metal surface to conform to the contour of the harder metal surface and improve the sealing contact.

It will be appreciated that the conforming of the softer surface occurs microscopically rather than macroscopically. Thus, no substantial change in dimensions takes place during the sealing process. The conforming of the softer surface allows the surfaces to function nearly as well as, or even better than, perfectly flat surfaces.

It will be realized that the conforming of the softer surface involves deformation of the softer surface. In those cases where the surface imperfections are not too great, the deformation will be elastic (i.e. , nonpermanent) deformation. In the case of more severe imperfections, the deformation can be best described as plastic (i.e. , permanent) deformation. When severe surface imperfections are present, plastic deformation tends to permanently reduce the size of the imperfections and thus improve the sealing function during subsequent uses. If the deformation falls within the elastic range of the softer material, the surface will repeatedly conform to the harder surface.

It is important that the difference in hardness of the materials not be too great. For example, channel wall 230A material must not be too much softer than the tapered ridge side 129A material. If the channel wall material is too soft, channel walls 230A may undergo too much plastic deformation resulting in damage during insertion of tapered ridge 118A and possibly making disassembly and reuse of the union difficult due to permanent macroscopic deformation of the channel wall 230A. Conversely, if channel wall 230A material is not soft enough, the maximum possible seal will not be formed.

It will be appreciated that in some applications considerations of providing a secure seal may outweigh considerations of reusability. In such circumstances, it may be deemed best to use materials which widely differ in their hardness even if it means that the device may only be reused a few times. Alternatively, if reusability is the paramount consideration, use of relatively hard materials for both fitting member 110A and ferrule 210 may be deemed best. However, as the hardness differential between the materials decreases, the pressure which the union can contain when hand-tightened will decrease. Conversely, as the hardness differential between the two materials increases, a secure seal may still be attainable by hand tightening even if harder materials are used.

By carefully implementing considerations of the angle of the sealing surfaces, the tolerance of the angle, the surface roughness of the sealing surfaces, the hardness exhibited by the sealing surfaces, and the coefficients of thermal expansion exhibited by the materials, a pipe union assembly which is reusable many times at extreme pressures and temperatures, and through repeated thermal cycles, is obtained. It should be appreciated that if less than maximum sealing in extreme conditions is all that is required, one or more of the considerations may be applied less rigorously.

Male external sleeve 304 and female external sleeve 302, shown in Figures 1 and 2 and in Figures 6 and 7, are provided to align and urge fitting member ridge 118A into sealing engagement with sealing member channel 228A and to secure the resultant seal. In one general purpose embodiment, external sleeves 304 and 302 are fabricated from carbon steel type 1018. Carbon steel 1018 is a relatively low-cost, easily machined material having sufficient strength for a general purpose union.

As seen in Figures 2 and 4, each fitting member 110A and 110B has on its external surface an abutting edge, designated 140A and 140B, respectively. Referring to Figure 2, the external sleeves 304 and 302 are each formed with corresponding compressing edges, 308 and 306, such that when both male external sleeve 304 and female external sleeve 302 are drawn together by joining the threads 312 and 310 of the male and female external sleeves 304 and 302, respectively, tapered ridge 118A is urged into sealing contact with tapered channel 228A.

As shown in Figure 1, external sleeves 302 and 304 are generally cylindrical and have dimensions which allow their inner diameters to slip over the outer diameters of fitting members 110A or 110B and ferrule 210 with compressing edges 306 and 308 engaging abutting edges 140A and 140B, respectively. Preferably, the fit between the inner diameter of external sleeves, 302 and 304, and the outer diameters of fitting members 110A and 110B and ferrule 210, is a precise one, as shown in Figure 2, so as to add additional strength to the

union 100 by contacting the outer circumference of ferrule 210 and stabilizing its position.

It should be appreciated that structures other than the structures shown in the figures may be devised and used to urge sealing member 210 and fitting members 110A and 110B into sealing engagement.

Optionally, external sleeves 302 and 304 may also be provided with set screws as shown best in Figures 6 and 7 at 330 and 331. Set screw 331, inserted through the threaded bore provided at the circumference of male external sleeve 304 protrudes into ferrule recess 211 but does not make contact with ferrule 210. In this way, ferrule 210 is "loosely" held in contact with fitting member 110B so as to be held ready for insertion of ridge 118B. Also, since ferrule 210 is held captive by set screw 331, it will not be misplaced. However, ferrule 210 should still be allowed to rotate freely so set screw 331 can not be inserted too far. It should be appreciated that more than one set screw 331 may be included.

As shown best in Figure 2, set screws 330 inserted through female external sleeve 302 preferably engage the end of male external sleeve 304 which is inserted into female external sleeve 302. Set screws 330, when tightened, prevent the union from being disassembled inadvertently and also prevent either of external sleeves 302 or 304 from loosening due to vibration.

As explained earlier, the thermal contraction of the components at cold temperatures must also be considered in order to provide a pipe union assembly which may be assembled at room temperature but yet still maintain a seal when the union is subjected to very low temperatures. Proper selection of a material for fabrication of ferrule 210 and fitting member 110A, e.g. , choosing a material having a different (either higher or lower) thermal expansion coefficient for fabrication of fitting member 110A, assists in maintaining a seal when very cold temperatures are encountered.

Sometimes, however, reliance on thermal contraction of the members may not be completely effective to ensure that a proper seal will be maintained when very cold temperatures are encountered. This is because axial contraction of fitting member 110A, along line D of Figure 4 may counteract any positive effect of radial contraction. The term often used to describe such axial contraction is "creeping."

In order to ensure that a proper seal is maintained when temperatures fall well below the ambient temperature at the time of assembly, a structure is provided to resiliently urge perimetric tapered ridge 118A into sealing member channel 228A. This function is accomplished by a creep-compensating washer 320 shown in the view of Figure 2 as well as in the perspective view of Figure 5.

Washer 320, which is preferably a spring washer, is placed between abutting edge 140B of fitting member 110B and compressing edge 308 of male external sleeve 304 as seen best in Figure 2. Alternatively, compensating washer 320 may be placed between abutting edge 140A of fitting member 110A and compressing edge 306 of female external sleeve 302. Still further, two or more compensating washers 320 can be simultaneously used for additional compensation if desired.

As can be seen in Figure 5, washer 320 is formed in a conical section which allows washer 320 to act as a spring. The spring-like structure of washer 320 can be seen best in the cross-sectional view of Figure 2. Thus, as tapered ridges 118A and 118B tend to recede from sealing member channels 228A and 228B due to axial thermal contraction (i.e. , "creeping"), compensating washer 320 compensates for this creep by urging tapered ridges 118A and 118B into sealing contact with channel walls 230A and 230B.

As shown in Figures 1 and 2, each of fitting members 110A and 110B are also provided with grooves 144A and 144B, into which restraining clips 326, shown in Figures 6 and 7, are placed. Grooves 144A and 144B and restraining clips 326, also referred to as safety clips 326, serve the important function of assisting and protecting the operator during the disassembly of the pipe union 100. By placing removable restraining clips 326 in grooves 144A and 144B near the external sleeves 302 and 304, restraining clips 326 restrain the unthreading of external sleeves 302 and 304.

For example, to disassemble the embodiment shown in Figure 7, the external sleeves 302 and 304 are unthreaded from one another until at least one fitting member 110A or 110B is separated from ferrule 210. However, before external sleeves 302 and 304 are completely disengaged from one another, each sleeve 302 and 304 is restrained by restraining clips 326 placed in grooves 144A and 144B.

As external sleeves 302 and 304 are loosened, the outward pressure on restraining clips 326 (which are attached to fitting members 110A and 110B) force one or both tapered ridges 118A or 118B out of sealing engagement with sealing member channels 228A or 228B. Thus, the seal between fitting members 110A or 110B and ferrule 210 is broken before external sleeves 302 and 304 are completely unthreaded from one another. In this way, restraining clips 326 assist the operator to disassemble the embodiment.

The restraining effect of the restraining clips 326 serves an important safety function in case any residual pressure remains in the pipes joined by pipe union assembly. If sufficient residual pressure is present, fitting members 110A or 110B may be forced out of sealing engagement with sealing member 210 as soon as external sleeves 302 and 304 are slightly loosened. However, since external sleeves 302 and 304 are still substantially threaded to each other, tapered ridges 118A and 118B and sealing member channels

13

228A and 228B, respectively, are held in close proximity to one another and the residual pressure is allowed to escape gradually.

The presence of escaping pressure alerts the operator of the presence of pressure remaining in the system. By this construction of the present invention, an operator is protected from an "exploding" pipe union which is created when all the restraints on the pipe union assembly are released and the internal pressure "blows apart" the union creating a serious hazard to the person disassembling the union.

The following examples are given to illustrate particular devices and methods within the scope of the present invention but they are not intended to limit the scope of the present invention.

Example 1

A device within the scope of the present invention substantially similar to the embodiment illustrated in Figure 1 was constructed. The attributes of the subject device were as follows:

```
Interior Diameter:       1.27 cm (1/2 inch)

End Fitting Material:     304 SS

Ferrule Material:         AL 7075

Angle of Sealing
    Interface:            8°
```

The device was hand tightened at about 27°C and subjected to a hydrostatic test. During the test a liquid was introduced into the device at 345 Bar (5000 psi). The test was repeated six times with the device being disassembled and assembled between each test. Importantly, no leaks or pressure drops were detected.

Example 2

A device within the scope of the present invention substantially similar to the device described in Example 1 was constructed and tested. The device was hand tightened at a temperature of 49°C and subjected to a hydrostatic test at 345 Bar (5000 psi) as described in Example 1. No leaks or pressure drops were detected.

Example 3

A device within the scope of the present invention substantially similar to the device described in Example 1 was constructed. The attribute of the subject device which differed from the attributes of the device of Example 1 was the ferrule material which was AL2024.

The device was subjected to an experimental field test where it was repeatedly assembled and disassembled by hand at room temperature of about 25°C during normal use. During the test, liquid nitrogen at at least as low as -190°C was conveyed by the device. Even though the device underwent repeated thermal cycles of over 200°C, no leaks were detected.

Example 4

A device within the scope of the present invention substantially similar to the embodiment illustrated in Figure 1 is constructed. The attributes of the subject device include:

```
Interior Diameter:          0.64cm (1/4 inch)

End Fitting Material:       C1040

Ferrule Material :          C1020

Angle of Sealing
Interface:                  8°
```

It is expected that the subject device, when tightened to 19.6 Newton-meters (15 ft. lbs.) at about 25°C, will contain a hydrostatic pressure of 690 Bar (10,000 psi) without any detectable leaks.

Still further, the subject device, with the restraining clips in place, is expected to break its seal before the external sleeves are completely unthreaded from each other. Thus, the person disassembling the union is protected from harm if residual pressure is present in the union.


Example 5

A device within the scope of the present invention substantially similar to the device described in Example 4 is constructed except the following attributes are altered:

```
End Fitting Material:       C5160

Ferrule Material:           C5160 with copper plate
                            Provided on tapered ridge
                            (electroplated to between
                            about 5/1000 and about
                            10/1000 inch thick)

Angle of Sealing
Interface:                  8°
```

It is expected that the subject device, when tightened to 19.6 Newton-meters (15 ft. lbs.) at about 25°C, will contain a hydrostatic pressure of 690 Bar (10,000 psi) without any detectable leaks.


Example 6

A device within the scope of the present invention substantially similar to the device described in Example 4 is constructed, except the following attributes are altered:

```
End Fitting Material:       C4140

Angle of Sealing
Interface:                  2°
```

It is expected that the subject device, when tightened to 19.6 Newton-meters (15ft. lbs.) at about 25°C, will contain a hydrostatic pressure of 690 Bar (10,000 psi) without any detectable leaks.


Example 7

A device within the scope of the present invention substantially similar to the device described in Example 4 is constructed, except the following attributes are altered:

```
End Fitting Material:      C4140

Angle of Sealing
         Interface:             12°
```

It is expected that the subject device, when tightened to 19.6 Newton-meters (15 ft. lbs.) at about 25°C, will contain a hydrostatic pressure of 690 Bar (1000 psi) without any detectable leaks.

B. A Second Presently Preferred Embodiment

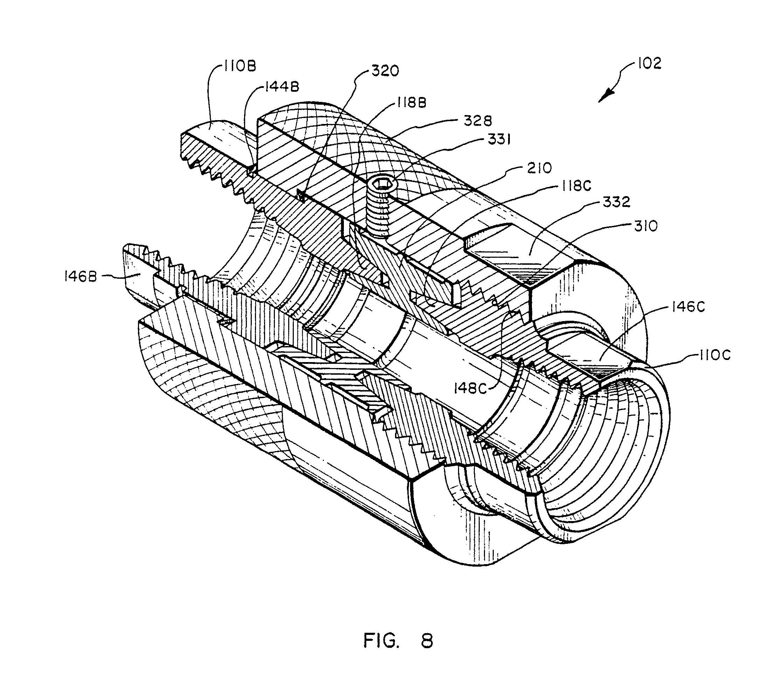

The major structural features of a second embodiment within the scope of the present invention illustrated in Figure 8, and generally designated 102, are substantially similar to those discussed in connection with the embodiment illustrated in Figures 1-7. While those structures which are clearly similar to previously described structures will not be described again, the differences between the two embodiments will be brought out in the following discussion.

The embodiment illustrated in Figure 8 is configured so that only a single external sleeve is necessary. Fitting member 110B is substantially the same in both Figure 8 and Figure 1; however, male external sleeve 304 and female external sleeve 302 have been replaced by single female threaded sleeve 328 illustrated in Figure 8. Female threaded sleeve 328 engages fitting member II0B in a fashion similar to that described in connection with male external sleeve 304 and fitting member II0B as illustrated in Figure I.

Fitting member II0C, and tapered ridge II8C, are substantially identical to the previously described structures except that fitting member II0C is provided with threads I48C on its outer circumference. When assembled, threads 3I0 provided on female external sleeve 328, engage fitting member threads I48C. It will be appreciated that by use of a single external sleeve 328, the fabrication of, and also the use of, embodiment I02 may be simplified.

Fitting member II0B is provided with groove I44B for insertion of a restraining clip. It will be appreciated that the restraining clip (not shown in Figure 8) still serves the important safety function of breaking the seal of the assembly before female threaded sleeve 328 may be completely unthreaded from fitting member II0C.

Fitting members II0B and II0C and female threaded sleeve 328 are provided with areas which are generally called "wrench flats" I46B, I46C, and 332, respectively. The wrench flats are provided in order to allow convenient grasping of the structures of the embodiment by a wrench, or other similar tool.

Since the present invention is well adapted for use both in cryogenic and high temperature applications, it is often necessary that the person disassembling the union must use a wrench or other tool since contact with the embodiment at extreme temperatures would cause personal injury. As will be appreciated by the foregoing description, even though the present invention may form an adequate seal for use at moderate pressures when hand tightened, the same device will contain much higher pressures when tightened using a wrench or a wrench-like apparatus.

The following examples are given to illustrate particular devices and methods within the scope of the present invention but they are not intended to limit the scope of the present invention.

Example 8

A device within the scope of the present invention substantially similar to the embodiment illustrated in Figure 8 was constructed. The attributes of the subject device were as follows:

```
Interior Diameter:      0.64 cm (1/4 inch)

End Fitting Material:    303 SS

Ferrule Material:        AL 2011T3

Angle of Sealing         8°
         Interface:
```

EP 0 231 076 B1

The subject device was tightened at room temperature to 19.6 Newton-meters (15 ft. lbs.) and subjected to a hydrostatic test. During the test a liquid was introduced into the device at 1500 psi and then the pressure was increased by 500 psi every 10 minutes until a pressure of 690 Bar (10,000 psi) was reached. No pressure loss or leaks were detected at any time during the test.

Example 9

A device within the scope of the present invention substantially similar to the embodiment illustrated in Figure 8 was constructed. The attributes of the subject device were as follows:

| | |
|---|---|
| Interior Diameter : | 5 cm (2 inches) |
| End Fitting Material: | C1040 |
| Ferrule Material: | C1020 |
| Angle of Sealing Interface: | $6^{\circ}$ |

The subject device was tightened at room temperature to 390 Newton-meters (300 ft. lbs.) and subjected to a hydrostatic test. During the test a liquid was introduced into the device at 414 Bar (6000 psi) and then the pressure was increased gradually until leakage was detected when the pressure reach 655 Bar (9500 psi). When the pressure reached 655 Bar (9500 psi) the conventional pipe threads joining the fitting members to the pipe members failed thus concluding the test. However, no leakage from the device itself was detected.

Example 10

A device within the scope of the present invention substantially similar to the device described in Example 9 was constructed, except the ferrule material was C1018.
The subject device was hand tightened at room temperature and subjected to a hydrostatic test. During the test a liquid was introduced into the device at a pressure of 69 Bar (1000 psi). No leaks or pressure drops were detected, even though the device was hand tightened.

Example 11

A device within the scope of the present invention substantially similar to the device described in Example 9 was constructed.
The subject device was tightened to 390 Newton-meters (300 ft lbs.) at about 26° C and subjected to a hydrostatic test. During the test a liquid was introduced into the device at a pressure of 414 Bar (6000 psi). The device was left for a period of 14 hours during which the temperature dropped to 20° C. At that time it was noted that the pressure had dropped to 345 Bar (5000 psi). The 69 Bar (1000 psi) drop corresponds to the drop expected due to the decrease in temperature. Importantly, no leaks were detected.

Example 12

A device within the scope of the present invention substantially similar to the device described in Example 9 was constructed, except the ferrule material was C4140.
The subject device was tightened to 390 Newton-meters (300 ft. lbs.) at about 25° C and subjected to a hydrostatic test. During the test a liquid was introduced into the device at a pressure of 414 Bar (6000 psi). The device was left for a period of 14 hours during which time the temperature increased to about 27° C. At that time it was noted that the pressure had increased to 424 Bar (6150 psi). The noted pressure increase corresponds to the expected increase due to the temperature rise. Importantly, no leaks were detected.

17

Example 13

A device within the scope of the present invention substantially similar to the device described in Example 9 was constructed, except the ferrule material was C4120 and a ferrule coating comprising zinc electroplated to a thickness of 0.0129 to 0.0254 cm (5/1000 to 10/1000 inch) was provided on the ferrule.

The subject device was hand tightened at room temperature and subjected to a hydrostatic test. During the test a liquid was introduced into the device at a pressure of 138 Bar (2000 psi). At the end of 10 minutes a pressure drop of 1.7 Bar (25 psi) was noted but no leaks were detected indicating that the pressure drop was due to fluctuations in the test equipment.

Example 14

A device within the scope of the present invention substantially similar to the device described in Example 9 was constructed, except the angle of the sealing interface was 8°.

The subject device was tightened at room temperature to 390 Newton-meters (300 ft. lbs.) and subjected to a hydrostatic test. During the test a liquid was introduced into the device at a pressure of 414 Bar (6000 psi). After 12 minutes, the pressure had dropped to 330 Bar (4800 psi) and a slight leak was detected. It was subsequently determined that the surface roughness of the ridge sides and channel walls exceeded the preferred maximum and that this was the cause of the lower than expected performance of the device. This example demonstrates the importance of proper surface roughness if maximum sealing is required.

Example 15

A device within the scope of the present invention substantially similar to the embodiment illustrated in Figure 8 was constructed. The attributes of the subject device were as follows :

```
Interior Diameter:        5 cm (2 inches)

End Fitting Material:     304SS

Ferrule Material:         AL 2024

Angle of Ridge Sides:     8°

Angle of Channel Walls:   10°
```

The subject device was hand tightened at room temperature and subjected to a hydrostatic test. During the test a liquid was introduced into the device at a pressure of 35 Bar (500 psi). No pressure loss or leakage were detected after 10 minutes. However, the device failed to contain the liquid pressures much above 35 Bar (500 psi). This example demonstrates the importance of properly matching the angle of the ridge sides and channel walls.

Example 16

A device within the scope of the present invention substantially similar to the device described in Example 13 was constructed, except the angle of the sealing interface was 8°.

The subject device was hand tightened at room temperature and subjected to a hydrostatic test. During the test a liquid was introduced into the device at a pressure of 13.8 Bar (200 psi). No leaks were detected at 13.8 Bar (200 psi), but the device failed to contain the liquid when the pressure was increased much above 13.8 Bar (200 psi). It was subsequently determined that the cause of the lower than expected performance of this device was due to the zinc plating provided on the ferrule. The plating was found to be uneven, thus demonstrating the importance of the tolerance of the ridge side and channel wall angle and also of the proper surface roughness.

Example 17

A device within the scope of the present invention substantially similar to the embodiment illustrated in Figure 8 was constructed. The attributes of the subject device were as follows:

```
Interior Diameter:        5 cm (2 inches)

End Fitting Material:      C1020

Ferrule Material:         C1020

Ferrule Coating:          Zinc (electroplated)
                          (0.0129 to 0.0254 cm)
                          (5/1000 to 10/1000 inch)

Angle of sealing
Interface:                8°
```

The subject device was hand tightened at room temperature and subjected to a hydrostatic test. During the test a liquid was introduced into the device at a pressure of 138 Bar (2000 psi). The device initially failed to contain this pressure. However, the device was disassembled and assembled several times and retested. Upon retesting, the device contained a pressure of 138 Bar (2000 psi) over a period of 10 minutes with no pressure loss or leaks. It was concluded that the repeated assembly and disassembly improved the sealing function by reducing the surface roughness of the sealing interfaces.

Example 18

Six devices within the scope of the present invention substantially similar to the embodiment illustrated in Figure 8 were constructed. The attributes of the subject devices were as follows:

```
Interior Diameter:        5 cm (2 inches)

End Fitting Material:     C1020

Ferrule Material:         C1040

Angle of Sealing
Interface:                8°
```

The subject devices were subjected to an experimental field test at an installation involved in tertiary recovery of oil by steam injection. The installation was located in Northern Alberta, Canada. The devices were hand tightened at ambient temperatures as low as -50° C. Steam at 350° C and 155 Bar (2250psi) was then injected into the devices. Oil was then recovered through the devices at a pressure of 41 Bar (600 psi). The devices underwent four steam injection/oil recovery cycles. The devices were disassembled and reassembled between each cycle. No leaks were detected during the test.

Example 19

A device within the scope of the present invention substantially similar to the embodiment illustrated in Figure 8 was constructed. The attributes of the subject devices were as follows:

19

Interior Diameter: 0.64 cm (1/4 inch)

End Fitting Material: 304SS

Ferrule Material: AL 2024

Angle of Sealing
    Interface: 8°

The device was subjected to an experimental field test where it was repeatedly assembled and disassembled at room temperature by hand during normal use. During the test, liquid nitrogen at least as low as -l90°C was conveyed by the device. Even though the device underwent a thermal cycle of over 200°C, no leaks were detected.

C. A Third Presently Preferred Embodiment

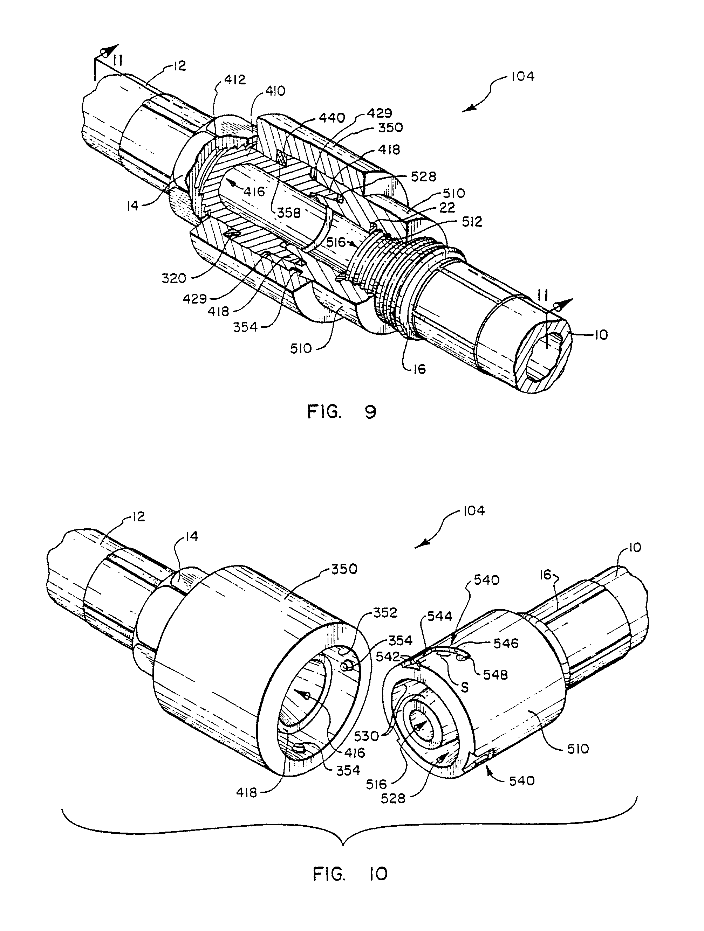

A third presently preferred embodiment within the scope of the present invention is illustrated in Figures 9-11 and is generally designated 104. Figure 9 is a partially cutaway perspective view of this third preferred embodiment. Many of the structures incorporated into the third embodiment shown in Figure 9-11 are very similar, or identical, to the structures used in the first embodiment previously described.

The embodiment shown in Figure 9 includes one fitting member 4l0 and one sealing member 5l0. Fitting member 4l0 is provided with a tapered ridge 4l8 running parametrically around the innermost end of fitting member 4l0 in a manner similar to tapered ridge ll8A or ll8B of the previously described embodiment. Sealing member 5l0 is provided with tapered channel 528 running parametrically around the innermost end of sealing member 5l0.

One female external sleeve 350 is provided with compressing edge 358 which biases compensating washer 320 against abutting edge 440 of fitting member 4l0. Sleeve 350 attaches to the external surface of sealing member 5l0 in a manner to be described in more detail hereinafter.

This third embodiment has fewer components than the previously described first embodiment and may be used in many of the same applications as the previously described embodiment. However, it is best suited for use in applications involving lower pressures and little thermal cycling. For example, as suggested by Figures 9-11, the embodiment may be used for providing an efficient union for connecting hoses, such as low pressure hydraulic hoses or water hoses. This third embodiment, is easier and less expensive to manufacture because of fewer components and is thus also easier to assemble and disassemble.

As shown in the perspective view of Figure 9, the third embodiment includes fitting member 4l0 which is similar in construction to fitting member ll0A or ll0B of the first embodiment. Fitting member 4l0, as shown in Figure 8, is provided with male threads 4l2 for connecting fitting member 4l0 to hose l2 by way of hose fitting l4 and gasket 20, shown in Figure 9.

Similar to the first embodiment, fitting member 4l0 of the third embodiment is provided with tapered ridge 4l8. However, only one fitting member and only one external sleeve (instead of two) are used to form the seal in the third embodiment. Thus, the third embodiment may be fabricated at a significantly lower cost than the first embodiment.

The considerations discussed above in connection with forming an adequate seal in the first embodiment, particularly regarding the angle of tapered ridge sides 429, and the materials from which fitting member 4l0 is fabricated, are substantially the same for this third embodiment.

For example, referring to Figure ll, the angle of tapered ridge sides 429 in relation to the fitting member central axis is preferably within the range of about 2° to about l2°, with the most presently preferred value being about 8°. Furthermore, the hardness differential between the material comprising tapered ridge sides 429 and sealing member channel walls 530 should be within the range of about l to about 300 Brinell units with the most presently preferred differential being from about l0 to about l50 Brinell units. Still further, as discussed in detail with respect to the first embodiment, fabricating fitting member 4l0 and sealing member 5l0 of materials having different temperature expansion coefficients will also promote proper sealing of the second embodiment when thermal cycles are encountered.

Since the third embodiment is primarily contemplated for use in applications involving less severe temperatures and pressures than the first embodiment, consideration of all of the features used in the first embodiment may not be necessary in order to provide for proper sealing in the practical operation of the second embodiment.

As explained above, the angle at which tapered ridge sides 429 and channel walls 530 are oriented is preferably in the range from about 6° to about 8°; however, tolerances need not be close if the embodiment is used in only low pressure conditions.

Furthermore, if the temperatures and pressures which the third embodiment are subjected to are not extreme, the considerations relating to the hardness differential and the thermal expansion coefficients of the components may be applied less rigorously than with the first or second embodiment. For example, in some low pressure and stable temperature situations, it may not even be necessary to use materials having a hardness differential or having specific thermal expansion coefficients in order to provide a proper seal.

Sealing member 510 of the third embodiment, as illustrated in Figure II, differs from sealing member 210 of the first embodiment in that hose 10 of the third embodiment is connected directly to sealing member 510 by way of a threaded connection between hose fitting 16 and sealing member threads 512. A gasket 22 may also optionally be provided. The sealing member tapered channel, generally designated 528 in Figure 10 and also shown in Figure 10, is preferably structured using the same considerations as discussed in connection with sealing member 210 of the first embodiment.

In the third embodiment, both fitting member 410 and sealing member 510 may be fabricated of materials corresponding to the materials from which the fitting member and sealing member are fabricated in the first embodiment. However, if the operating conditions do not involve extreme temperatures and pressures, it will be appreciated that the third embodiment may be fabricated of materials such as plastics or other materials which are easily molded or machined.

Figure 10 represents an exploded perspective view of the embodiment shown in Figure 9. Figure 10 shows tapered ridge 418, sealing member tapered channel 528 and interior cavity 516 of sealing member 510. The outer surface of sealing member 510 which is preferably cylindrical, is provided with three substantially L-shaped grooves, generally designated 540 (two of which are shown in Figure 9) which allow the third embodiment to be rapidly assembled or disassembled.

Each groove 540 receives a corresponding external sleeve pin 354 which is mounted to the interior surface of external sleeve 350, the interior surface of sleeve 350 being preferably cylindrical and of substantially the same diameter as the outer surface of sealing member 510. The pin 354 and groove 540 arrangement allows the embodiment to be quickly assembled or disassembled by essentially twisting the external sleeve and fitting member in opposite directions; this groove and pin arrangement has thus been termed a "quick twist coupling."

As can be seen best in Figure 10, grooves 540 are provided with a first portion 542 which is widened so as to form a mouth to easily receive pin 354. Groove 540 is also provided with a second portion 544 which is substantially perpendicular to the end of sealing member 510 and which allows pin 354 to travel freely for a distance before contacting a third portion 546 which preferably forms an angle of greater than 90°, preferably about 96°, with second portion 544. Groove 540 terminates with recess 548 which serves to lock pin 354 in place.

Once pin 354 is inserted through first groove portion 542 and into second groove portion 544 so as to contact the junction between groove portion 544 and 546, sealing member 510 and fitting member 410 are rotated in opposite directions such that each pin 354 slides along the third portion 546 of its respective groove 540. Since third groove portion 546 is oriented at an angle of about 96° from second groove portion 544, external sleeve 350 moves radially towards sealing member 510 and is "pulled onto" sealing member 510 as they are rotated to move pins 354 along third groove portions 546.

To make best use of the quick twist coupling feature of the third embodiment, it is preferable that tapered ridge 418 and tapered channel 528 first make sealing engagement when pins 354 are situated somewhere within the third groove portion 546 which is indicated by the bracket marked S. By positioning pins 354 and grooves 540 such that sealing engagement occurs when pins 354 are in the area marked S provides for a more secure seal and provides for a mechanism to subsequently break the seal as will be explained in more detail hereinafter.

The recess 548 located at the end of each third groove portion 546 serves to secure its respective pin 354 in place once pin 354 reaches recess 548. With grooves 540 being structured as described herein, tapered ridge 418 and tapered channel 528 are held in sealing engagement once pins 354 are locked into recesses 548 of grooves 540.

Figure II is a cross-sectional view of the third embodiment shown in Figure 9. Compensating washer 320 shown in Figure II may be identical to compensating washer 320 shown in Figure 5. Compensating washer 320, shown best in Figure II, serves a dual purpose in the third embodiment. As discussed previously in connection with the first embodiment, compensating washer 320 serves to provide compensa-

EP 0 231 076 B1

tion due to "creeping" (degradation of the seal due to thermal contraction) which occurs at low temperatures.

Importantly, compensating washer 320 in the third embodiment also serves to bias external sleeve 350 in a direction which will hold pins 354 in groove recesses 358 and thus provides the tension necessary for proper operation of the quick twist coupling. In this regard, when pins 354 are seated in groove recesses 358 washer 320 biases fitting member 4I0 towards sealing member 5I0, and thus assists in forming a proper seal.

As can be seen best in Figure II, fitting member 4I0 is provided with an abutting edge 440 while external sleeve 350 is provided with a compressing edge 358. One pin 354 and one groove recess 548 can be seen in the lower portion of Figure I0. Compensating washer 320 is located between external sleeve compressing edge 358 and fitting member abutting edge 440 so that compressing edge 358 and abutting edge 440 are urged apart. Pins 354, grooves 540, and compensating washer 320, are arranged such that sealing contact between tapered ridge 4I8 and tapered channel 528 occurs when pins 354 are situated in third groove portion 546 which is designated S in Figure I0. This arrangement provides that when pins 354 are received in groove recesses 548 shown best in Figure I0, compensating washer 320 is partially or fully compressed.

By the above-described arrangement, fitting member ridge 4I8 is held in tight sealing engagement with sealing member channel 528. When pins 354 are received in groove recesses 548, compensating washer 320 must be compressed even further to release the tension on pins 354 and remove pins 354 from recesses 548. When the third embodiment is disassembled, tapered ridge 4I8 and tapered channel 258 will be forced from sealing engagement once pins 354 pass through the area of third groove portion 546 which is designated S. Thus, the configuration of grooves 540 helps to break the seal when the external sleeve 350 and sealing member 5I0 are counter-rotated to disassemble the union.

It should be understood that compensating washer 320 may be replaced by structures other than that shown and described in connection with Figure II above. For example, if the embodiment is to be used only under moderate temperature and pressure conditions, compensating washer 320 may be a washer of a resilient material, such as rubber. Depending upon the application, those skilled in the art will be able to determine what alternative structures and materials may be used for compensating washer 320.

The most important criteria when selecting a material for compensating washer 320 is that washer 320 must be compressible so as to allow pins 354 to seat in groove recesses 548 while urging fitting member ridge 4I8 into sealing engagement with sealing member channel 528. This arrangement provides a coupling which is highly resistant to loosening due to vibration. Thus, when the above-described quick-twist coupling feature is used, there is often no need to include set screws, such as shown in Figures 2 and II at 330.

The following examples are given to illustrate particular devices and methods within the scope of the present invention but they are not intended to limit the scope of the present invention.

Example 20

A device substantially similar to the embodiment illustrated in Figure 9 was constructed except a threaded external sleeve was used rather than the "pin and groove" arrangement shown in Figure 9. The parameters of the subject device were as follows:

```
Interior Diameter:          5 cm (2 inches)

Fitting Member and
Sealing Member Material:C1020

Angle of Sealing
Interface:                  6°
```

The subject device was tightened to 390 Newton-meters (300 ft. lbs.) at room temperature and subjected to a hydrostatic test. During the test a liquid was introduced into the device at a pressure of 414 Bar (6000 psi). After a period of 40 minutes no loss of pressure or leaks were detected.

Example 21

22

A device substantially similar to the embodiment illustrated in Figure 9 was constructed except a threaded external sleeve was used rather than the "pin and groove" arrangement shown in Figure 9. The attributes of the subject device were as follows:

| | |
|---|---|
| Interior Diameter: | 5 cm (2 inches) |
| Fitting Material: | C1020 |
| Sealing Member Material: | C1020 provided with a zinc plating 5/1000 to 10/1000 inches thick (0.0129 to 0.0254 cm) |
| Angle of Interface: | 8° |

The subject device was hand-tightened at room temperature using handles 11.4cm (4.5 inches) long attached to the external sleeve of the device, and subjected to a hydrostatic test. During the test a liquid was introduced into the device at a pressure of 172 Bar ( 2,500 psi). While the device first failed to contain this pressure, it contained this pressure after it was disassembled and reassembled several times and then retested. It was subsequently determined that the repeated assembly and disassembly decreased the surface roughness (i.e., improved the surface finish) of the ridge sides and the channel walls thus improving the seal.

## D. A Fourth Presently Preferred Embodiment

Figure 12 is a cross-sectional view of another presently preferred embodiment within the scope of the present invention, generally designated 106, which is similar to the embodiment shown in Figure 9 with some optional alterations. For example, in Figure 12, the pipes 12 and 10 have been welded onto fitting member 410 and sealing member 510, respectively. Alternatively, pipes 12 and 10 could merely be fabricated as a unitary structures with fitting member 410 and sealing member 510, respectively.

Furthermore, in Figure 12, the quick twist coupling arrangement shown in Figures 9-11 has been replaced by a thread arrangement wherein the outer surface of sealing member 510 is provided with threads 552 which receive threads 360 provided on the inner surface of external sleeve 350. Additionally, set screws 330 may be optionally provided on external sleeve 350 in the locations shown. Set screws 330, when engaged, hold external sleeve 350 in a fixed relationship to sealing member 510. Thus, external sleeve 350 is kept from being unthreaded from sealing member 510, either inadvertently or due to vibration, unless set screws 330 are disengaged.

The embodiment shown in Figure 12 is provided with an additional structure, sealing ring 550, which provides an interface between fitting member ridge 418 and sealing member channel 528. As shown in both Figures 12 and 13, sealing ring 550 has a bore provided therethrough, the bore corresponding in size to the interior cavities, 416 and 516, of fitting member 410 and sealing member 510, respectively. Use of sealing ring 550 allows fitting member 410 and sealing member 510 to be fabricated with fewer constraints regarding the hardness differential of the materials, as described above, since the sealing ring itself may be fabricated of a material which provides the proper hardness differential.

For example, fitting member 410 and sealing member 510 may be fabricated of the same material while sealing ring 550 may be of a material having the proper hardness differential, where such a hardness differential is desired to form a better seal. This avoids the fabrication difficulties accompanying the plating of walls 530 of sealing member channel 528, as discussed in connection with the first embodiment shown in Figure 3, with a material having the proper hardness differential and is suitable for applications which require less demanding tolerances.

For example, fitting member 410 and sealing member 510 may be made of carbon steel while sealing ring 550 may be fabricated, of copper which will provide the proper hardness differential. Still further, when the embodiment shown in Figure 12 is constructed to less rigid tolerances, sealing ring 550, being of a softer material, will conform to imperfections in sealing member channel walls 530 and fitting member ridge sides 429 which may be caused where less costly and less precise fabrication techniques are used.

The embodiment illustrated in Figure 11 also shows a restraining clip 326 mounted onto the exterior surface of fitting member 4l0. Restraining clip 326 may either be permanently attached to fitting member 4l0 (as shown in Figure l2) or removably placed in a groove (not shown) provided in the fitting member 4l0.

Restraining clip 326 assists in breaking the seal between fitting member ridge 4l8 and sealing member channel 528 before external sleeve 350 is completely unthreaded from sealing member 5l0. As will be appreciated, the seal between fitting member ridge 4l8 and the walls of sealing member channel 528 is often difficult to break due to the seal formed therebetween.

Restraining clip 326 included in the fourth embodiment also serves the safety function described in connection with restraining clips 326 of the first embodiment. With restraining clip 326 in place, as shown is Figure l2, the seal between fitting member 4l0 and sealing member 5l0 is broken before external sleeve 350 may be completely removed from sealing member 5l0. Thus, any residual pressure remaining in the system will be allowed to gradually escape, thereby preventing the pipe union from "exploding" apart. Additionally, restraining clip 326 prevents external sleeve 350 from being completely removed from fitting member 4l0 and being misplaced.

### E. A Fifth Presently Preferred Embodiment

A fifth presently preferred embodiment within the scope of the present invention, generally designated l08, is illustrated in the perspective view of Figure l4, and in the cross-sectional view of Figure l5. While it will be readily appreciated that the embodiment illustrated in Figures l4 and l5 includes structures which are similar to the embodiment illustrated in Figures 9-ll, this fifth embodiment is particularly adapted for use in food processing applications.

In the food processing field, there is a particular concern for preventing the introduction of bacteria, or other contaminants including disease causing organisms, into the food product. This is a particular concern with liquid food products, especially dairy products such as milk. It is often desirable that the product be processed under aseptic conditions, that is, conditions which are free from disease causing organisms.

Ideally, food processing systems carrying liquid products such as milk would be completely sealed to prevent the introduction of contaminants. However, it is a practical necessity to include openings within the system to allow insertion and removal of the product as well as to allow disassembly of the system for periodic cleaning and maintenance.

Thus, there is a great need for union assemblies for pipes which allow easy assembly and disassembly and still are able to maintain an effective seal under a variety of conditions so as to exclude contaminants and thus maintain an aseptic condition within the pipe.

As stated earlier, the embodiment illustrated in Figures l4 and l5 shares many of the structural characteristics of the embodiments illustrated in Figures 9-ll. Similarly, it will be appreciated that extreme pressures, or extremely high temperatures, are not generally encountered in food processing applications. However, all of the previously mentioned considerations, such as the angles provided on tapered ridge 6l8 and tapered channel 728 as shown in both Figures l4 and l5, are applicable.

Furthermore, it will be appreciated that in light to moderate service applications, the considerations regarding hardness differential between the sealing surfaces and the thermal expansion coefficients of the material making up fitting members 6l0 and sealing member 7l0 may be adhered to less rigorously than if extreme service conditions are to be expected.

As shown in both the perspective view of Figure l4 and in the cross-sectional view of Figure l5, fitting member 6l0 is provided with an internal cavity, generally designated 6l6, and also threads 6l2 at its outermost end. It will be appreciated that fitting member threads 6l2 are just one of many methods that could be used to attach a pipe, hose, or tube to fitting member 6l0. Likewise, sealing member 7l0 is provided with an internal cavity, generally designated 7l6, and threads 7l2.

Similarly to the previously described embodiments, external sleeve 376 is used to maintain contact between fitting member 6l0 and sealing member 7l0. External sleeve 376 is provided with a compressing edge 378, as is shown best in Figure l5, while fitting member 6l0 is provided with an abutting edge 640. Interposed between compressing edge 378 and abutting edge 640 is compensating washer 320.

Compensating washer 320 is essentially similar to the compensating washer used with other embodiments. Sealing member 7l0 is provided with an acme-type thread on its outer surface. A portion of thread 740 can be seen in the cutaway portion of Figure l4 and the cross-sectional view of Figure l5. Sleeve 376 is provided with a ridge 380 which engages thread 740 on sealing member 7l0. It will be appreciated that many different types of threads, for example those used with the other embodiments illustrated herein, could also be used with fitting member 7l0 and sleeve 376.

As with several other embodiments of the present invention, the embodiment illustrated in Figures l4 and l5 is provided with a restraining clip 326. When restraining clip 326 is in place, tapered ridge sides 629 will be removed from contact with tapered channel walls 730 before sleeve 376 is completely unthreaded from sealing member 7l0. Thus, restraining clip 326 serves the essential safety function of allowing pressure contained within the union to be controllably released before the union is completely disassembled.

As stated earlier, the food processing industry has great concern for excluding contaminants from fluids flowing within a pipe. The embodiment illustrated in Figures l4 and l5 is particularly well adapted for meeting the needs of a aseptic food processing systems. First, the present invention, as explained earlier, provides a very reliable, and reusable, seal. However, if a leak should occur at the union, the embodiment is so structured and operated that no contaminants are allowed to enter the fluid flow within the union.

As shown best in Figure l5, the embodiment is provided with two fluid ports, also called steam ports, generally designated 750A and 750B. Both steam ports 750A and 750B are provided with threads 752A and 752B, respectively. In operation, pressurized sterilized steam, or culinary steam, is introduced into ports 750A and 750B through a pipe, hose, or tube, which may be conveniently attached by way of threads 752A or 752B.

Pressurized steam is introduced into ports 750A and 750B and enters tapered channel 728 by way of channels 754A and 754B. Alternatively, port 750A could be designated as steam inlet and port 750B could be designated as steam outlet. Thus, steam would be allowed to circulate, rather than just exert pressure, within tapered channel 728.

It will be appreciated that in either of the above alternatives, because of the steam pressure found within tapered channel 728, any disruption of sealing contact between tapered ridge sides 629 and tapered channel wall 730 will only result in the introduction of steam into the interior of the union as opposed to allowing the entrance of undesirable contaminants. Furthermore, the pressure within the steam supply lines (not shown) can be monitored to determine if a leak has occurred at the assembly.

Importantly, the steam must be supplied at a pressure greater than that encountered within the union assembly. If the steam is supplied at a pressure which is greater than both atmospheric pressure and the internal pressure of the union only steam will be allowed to enter into the interior of the union, and escape to the exterior of the union, rather than allowing contaminants to enter the union.

The introduction of a small amount of culinary steam into the fluid flow will not cause a significant degradation in the quality of the fluid. Conversely, if viable bacteria were introduced into the fluid flow, the entire batch of fluid would most likely be discarded due to the contamination. Thus, leaks at the inner seal between tapered ridge sides 629 and tapered channel wall 730 only allows a small amount of harmless steam to enter into fluid flow.

Alternatively, a disrupted seal at the outer seal between tapered ridge side 629 and sealing member wall 730 will merely result in a small amount of steam leaking to the outside of the union assembly. Due to the fact that the steam is pressurized, only steam is allowed to escape from the tapered channel thus blocking the entrance of contaminants into the tapered channel which might pose a contamination problem if leaks were to occur simultaneously at both the inner and outer seals.

It will be readily appreciated that ports 750A and 750B could be replaced by a single opening or three or more openings as well as other structures which serve the same function.

An additional benefit of the embodiment illustrated in Figures l4 and l5 is that the steam injected into the union may be used to raise the temperature of the assembly. Raising the temperature of the union helps to create aseptic conditions within the assembly thus reducing the danger of viable microorganisms entering the fluid flow.

The advantages that come with use of the embodiment illustrated in Figures l4 and l5 in the food processing industry will be readily appreciated. Included in these advantages is that the threat of contamination posed by faulty pipe unions can be greatly reduced. Yet other advantages include that the union may be easily disassembled for cleaning and may be reused many times.

It will be appreciated that this embodiment may have diverse applications in fields other than the food processing industry. For example, if it is critical that contaminants be kept out of a fluid line which must be readily and easily disconnected, the embodiment may be used with a fluid, which is compatible with the fluid flowing through the union, injected into ports 750A and 750B.

## F. Summary

It will be appreciated that the above described embodiments are a significant advance over the pipe couplings available in the prior art.

As mentioned previously, some of the primary considerations which must be implemented when practicing the present invention include the angle of the sealing surfaces, the surface roughness of the sealing surfaces, tolerance of the sealing surface angle, the hardness differential of the sealing surfaces, the coefficient of thermal expansion of the union components, as well as other considerations which were previously mentioned or which will be appreciated by those skilled in the art. Importantly, the pipe union assembly of the present invention provides the advantage of being quickly assembled and disassembled by hand or with simple tools.

Also of importance is that the present invention provides a metal-to-metal seal which may be used at extremely hot or extremely cold temperatures. Also, the present invention provides a pipe union which may be assembled at the ambient temperature and still maintain a secure seal over a wide range of temperatures and pressures. Furthermore, a pipe union made in accordance with the present invention may be reused many times due to, among other features, the use of a rigid sealing member, rather than a flexible sealing member.

Also, the rigid sealing member is extremely resistant to damage caused by over tightening. The present invention also includes an embodiment which provides protection to a person disassembling the pipe union by allowing residual pressure to be released in a controlled fashion rather than allowing the residual pressure to "blow apart" the pipe union. These and other benefits are gained by use of the pipe union assemblies of the present invention.

## Claims

1. A pipe union assembly comprising:
   a hollow fitting member (110 A,B) having means (112 A,B) for attaching the fitting member at a first end thereof to a pipe member;
   an annular tapered ridge (118 A,B) extending from a second end of the fitting member having two opposing flat sides (129 A,B), each of said sides being oriented at an angle in the range of from about 2° to about 12° with respect to a central axis of the fitting member;
   a hollow rigid sealing means (210) having means for attaching the rigid sealing means at a first end thereof to a pipe member;
   an annular tapered channel (228 A,B) configured to complement the shape of the ridge and formed at a second end of the sealing means, the tapered channel receiving the tapered ridge of the fitting member in sealing engagement and being defined by two flat tapered walls (230 A,B), said walls being oriented with respect to a central axis (C) of the sealing means at an angle which is equal to the angle at the central axis of the fitting member;
   the tapered ridge sides being fabricated from a material having a Brinell hardness value in the range from about 1 Brinell unit to about 300 Brinell units different than the Brinell hardness value of the material from which the tapered channel walls are fabricated, the Brinell units being measured on the Brinell hardness scale, and the ridge being configured so that it cannot completely penetrate the tapered channel;
   and the rigid sealing means (210) being sufficiently rigid such that the sealing means substantially retains its original configuration when the tapered channel receives the tapered ridge.

2. A pipe union assembly as defined in claim 1 further comprising means for selectively securing the tapered ridge (118 A,B) in sealing engagement with the tapered channel (228 A,B) or releasing the tapered ridge and the tapered channel from sealing engagement.

3. A pipe union as defined in claim 2 wherein the means for selectively securing the tapered ridge in sealing engagement with the annular channel comprises:
   an external sleeve (350);
   a pin (354) mounted on the internal surface of the external sleeve;
   a groove (540) formed on the external surface of the sealing means being rotatable with respect to each other about their common axis, the groove being capable of receiving the pin and locking the pin into place when the external sleeve is rotated with respect to the fitting member.

4. A pipe union assembly as defined in claim 2 wherein the means for selectively securing comprises a rotatable external sleeve, (302, 304) said external sleeve threadably engaging a fitting member (331).

26

5. A pipe union assembly as defined in claim 2 comprising two fitting members and wherein the means for selectively securing comprises two external sleeves (302, 304), each external sleeve engaging one fitting member and the external sleeves engaging the other.

6. A pipe union assembly as defined in any of claims 1 to 5 further comprising restraining means (331) for inhibiting the releasing of the means for selectively securing such that the sealing engagement between the tapered ridge and the tapered channel is broken before the assembly is completely disassembled.

7. A pipe union assembly as defined in any of claims 1 to 6 wherin the sides (129 A,B) of the ridge are oriented at an angle in the range from about 5° to about 9° with respect to a central axis of the fitting member and wherein the annular channel is defined by two flat tapered walls, said walls being oriented with respect to a central axis of the sealing means at an angle which is equal to the angle at which the tapered ridge sides are oriented with respect to the central axis of the fitting member.

8. A pipe union assembly as defined in claim 7 wherein each of said sides (129 A,B) is oriented at an angle in the range from about 6° to about 8° with respect to a central axis.

9. A pipe union assembly as defined in any of claims 1 to 8 wherein the tapered ridge sides are fabricated from a material having a Brinell hardness value in the range from about 5 Brinell units to about 200 Brinell units different than the Brinell hardness value of the material from which the tapered channel walls are fabricated.

10. A pipe union assembly as defined in claim 9 wherein the tapered ridge sides are fabricated from a material having a Brinell hardness value in the range from about 10 Brinell units to about 150 Brinell units different than the Brinell hardness value of the material from which the tapered channel walls are fabricated.

11. A pipe union assembly as defined in any of claims 1 to 10 wherein the sealing means is fabricated from a material having a coefficient of thermal expansion exhibited by the material from which the fitting member is fabricated.

12. A pipe union assembly as defined in any of claims 1 to 10 adapted for use at cryogenic temperatures wherein the sealing means is fabricated from a material having a coefficient of thermal expansion which is greater than the coefficient of thermal expansion exhibited by the material from which the fitting member is fabricated and further comprising of said rigid sealing means for compensating for thermal contraction of said rigid sealing means and said fitting member so as to maintain said rigid sealing means in sealing engagement with said fitting members at temperatures lower than the ambient assembly temperature.

13. A pipe union as defined in any of claims 1 to 11 further comprising a compensating means (320) for compensating for thermal contraction of the rigid sealing means and the fitting member so as to maintain the rigid sealing means in sealing engagement with the fitting member at temperatures lower than the ambient assembly temperature.

14. A pipe union assembly as defined in any of claims 1 to 13 wherein the means for attaching the rigid sealing means at a first end to a pipe member comprises a fitting member attached to a pipe member.

15. A pipe union assembly as defined in any of claims 1 to 14 wherein the sealing means further comprises a port (754 A,B), said port being connected to the tapered channel.

## Revendications

1. Raccord de tube comprenant :
   un élément de raccord creux (110A,B) comportant des moyens (112A,B) pour fixer l'élément de raccord , à une première extrémité de celui-ci, à un élément de tube;
   une partie mâle annulaire conique ou à section trapézoidale (118A,B) qui s'étend à partir d'une deuxième extrémité de l'élément de raccord et qui présente deux faces à génératrice rectiligne opposées (129A, B), chacune des dites faces étant orientée suivant un angle compris entre 2° environ et 12° environ par rapport à un axe central de l'élément de raccord ;

un élément d'étanchéité rigide creux (210) comportant des moyens pour fixer l'élément d'étanchéité rigide, à une première extrémité de celui-ci, à un élément de tube ;

une gorge annulaire conique ou à section trapézoidale (228A,B) de configuration complémentaire de celle de la partie mâle et formée à une deuxième extrémité de l'élément d'étanchéité, la gorge conique recevant la partie mâle conique de l'élément de raccord en contact d'étanchéité et étant définie par deux parois coniques à génératrice rectiligne (230A,B) , lesdites parois étant orientées par rapport à un axe central (C) de l'élément d'étanchéité suivant un angle qui est égal à l'angle par rapport à l'axe central de l'élément de raccord ;

les faces de la partie mâle conique étant fabriquées en une matière dont la valeur de dureté Brinell diffère, de 1 unité Brinell environ à 300 Unités Brinell environ, de la valeur de dureté Brinell de la matière dont sont fabriquées les parois de la gorge conique, les unités Brinell étant mesurées sur l'échelle de dureté Brinell, et la partie mâle ayant une configuration telle qu'elle ne peut pas pénétrer complètement dans la gorge conique ;

et l'élément d'étanchéité rigide (210) étant suffisamment rigide pour que l'élément d'étanchéité conserve sensiblement sa configuration initiale lorsque la gorge conique reçoit la partie mâle conique.

2.  Raccord de tube suivant la revendication 1, comprenant en outre des moyens pour fixer sélectivement la partie mâle conique (118A,B) en contact d'étanchéité avec la gorge conique (228A,B) ou pour dégager la partie mâle conique et la gorge conique du contact d'étanchéité.

3.  Raccord de tube suivant la revendication 2, dans lequel les moyens pour fixer sélectivement la partie mâle conique en contact d'étanchéité avec la gorge annulaire comprennent :

un manchon extérieur (350) ;

un ergot (354) monté sur la surface intérieure du manchon extérieur ;

une rainure (540) formée sur la surface extérieure de l'élément d'étanchéité, le manchon et l'élément d'étanchéité pouvant tourner l'un par rapport à l 'autre, autour de leur axe commun, la rainure étant prévue pour recevoir l'ergot et bloquer l'ergot en position lorsqu'on fait tourner le manchon extérieur par rapport à l'élément de raccord.

4.  Raccord de tube suivant la revendication 2, dans lequel les moyens de fixation sélective comprennent un manchon extérieur tournant (302,304), ledit manchon extérieur se vissant sur un élément de raccord (331).

5.  Raccord de tube suivant la revendication 2, comprenant deux éléments de raccord, dans lequel les moyens de fixation sélective comprennent deux manchons extérieurs (302,304), chaque manchon extérieur s'engageant sur un élément de raccord et les manchons extérieurs étant mutuellement en prise.

6.  Raccord de tube suivant l'une quelconque des revendications 1 à 5, comprenant en outre des moyens de retenue (331) pour empêcher la séparation des moyens de fixation sélective, de sorte que le contact d'étan-chéité entre la partie mâle conique et la gorge conique est interrompu avant que l'assemblage soit complètement dissocié.

7.  Raccord de tube suivant l'une quelconque des revendications 1 à 6, dans lequel les faces (129A,B) de la partie mâle sont orientées suivant un angle compris entre 5° environ et 9° environ par rapport à un axe central de l'élément de raccord, et dans lequel la gorge annulaire est définie par deux parois coniques droites, lesdites parois étant orientées par rapport à un axe central de l'élément d'étanchéité suivant un angle qui est égal à l'angle suivant lequel les faces de la partie mâle conique sont orientées par rapport à l' axe central de l'élément de raccord.

8.  Raccord de tube suivant la revendication 7, dans lequel chacune des dites faces (129A,B) est orientée suivant un angle compris entre 6° environ et 8° environ par rapport à un axe central.

9.  Raccord de tube suivant l'une quelconque des revendications 1 à 8, dans lequel les faces de la partie mâle conique sont fabriquées en une matière dont la valeur de dureté Brinell diffère, de 5 unités Brinell environ à 200 unités Brinell environ, de la valeur de dureté Brinell de la matière dont sont fabriquées

EP 0 231 076 B1

les parois de la gorge conique.

10. Raccord de tube suivant la revendication 9, dans lequel les faces de la partie mâle conique sont fabriquées en une matière dont la valeur de dureté Brinell diffère, de 10 unités Brinell environ à 150 unités Brinell environ, de la valeur de dureté Brinell de la matière dont sont fabriquées les parois de la gorge conique.

11. Raccord de tube suivant l'une quelconque des revendications 1 à 10, dans lequel l'élément d'étanchéité est fabriqué en une matière ayant un coefficient de dilatâtion thermique comparable à celui de la matière dont est fabriqué l'élément de raccord.

12. Raccord de tube suivant l'une quelconque des revendications 1 à 10, prévu pour l'utilisation à des températures cryogéniques, dans lequel l'élément d'étanchéité est fabriqué en une matière dont le coeffi-cient de dilatation thermique est plus grand que le coefficient de dilatation thermique de la matière dont est fabriqué l'élément de raccord, et comprenant,en outre dudit élément d'étanchéité rigide,des moyens de compensation de la contraction thermique dudit élément d'étanchéité rigide et dudit élément de raccord de façon à maintenir ledit élément d'étanchéité rigide en contact d'étanchéité avec lesdits éléments de raccord aux températures inférieures à la température ambiante d'assemblage.

13. Raccord de tube suivant l'une quelconque des revendications 1 à 11, comprenant en outre des moyens de compensation (320) pour compenser la contraction thermique de l'élément d'étanchéité rigide et de l'élément de raccord de façon à maintenir l'élément d'étanchéité rigide en contact d'étanchéité avec l'élément de raccord aux températures inférieures à la température ambiante d'assemblage.

14. Raccord de tube suivant l'une quelconque des revendications 1 à 13, dans lequel les moyens de fixation de l'élément d'étanchéité rigide à une première extrémité d'un élément de tube comprennent un élément de raccord fixé à un élément de tube.

15. Raccord de tube suivant l'une quelconque des revendications 1 à 14, dans lequel l'élément d'étanchéité comporte en outre un orifice (754A,B), ledit orifice étant en communicaticn avec la gorge conique.

**Ansprüche**

1. Rohrverbindungsaufbau mit
   - einem hohlen Paßelement (110 A,B) mit Vorrichtungen (112 A,B) zum Befestigen dieseS Papelements mit einem ersten Ende an einem Rohrelement;
   - einem ring- und kegelförmigen Grat (118 A,B), der sich von einem zweiten Ende des Paßelements erstreckt und zwei gegenüberliegende, abgeflachte Seiten (129 A,B) aufweist, von denen jede mit einem Winkel im Bereich von etwa 2° bis etwa 12° bezüglich einer zentralen Achse des Paßelements ausgerichtet ist;
   - einer hohlen, starren Dichtvorrichtung (210) mit Vorrichtungen zur Befestigung dieser starren Dichtvorrichtung mit einem ersten Ende an einem Rohrelement;
   - einem kegelförmigen Ringkanal (228 A,B), der so augebildet ist, daß er der Form des Grats angepaßt und an einem zweiten Ende der Dichtvorrichtung ausgebildet ist, wobei der kegelförmige Kanal den kegelförmigen Grat des Paßelements dichtend aufnimmt und durch zwei flache, schräge Wände (230 A,B) definiert wird, wobei die Wände bezüglich einer zentralen Achse (C) der Dichtvorrichtung mit einem Winkel, der gleich dem Winkel bezüglich der zentralen Achse des Paßelements ist, ausgerichtet sind;
   wobei die schrägen Gratseiten aus einem Werkstoff gefertigt sind, der einen Brinell-Härtewert im Bereich von etwa 1 Brinell-Einheit bis etwa 300 Brinell-Einheilen aufweist, im Unterschied zu dem Brinell-Härte-Wert des Werkstoffs, aus dem die schrägen, flachen Kanalwände gefertigt sind, wobei die Brinell-Einheiten auf der Brinell-Härte-Skala gemessen werden, und wobei der Grat so ausgebildet ist, daß er nicht völlig in den Kegelförmigen Kanal eindringen kann;
   und wobei die starre Dichtvorrichtung (210) hinreichend starr ist, so daß die dichtvorrichtung im wesentlichen ihre ursprüngliche Ausbildung beibehält, wenn der kegelförmige Kanal den kegelför-migen Grat aufnimmt.

29

2. Rohrverbindungsaufbau nach Anspruch 1, der ferner Vorrichtungen zum wahlweisen absichernden Befestigen des kegelförmigen Grats (118 A,B) in abdichtender Verbindung mit den kegelförmigen Kanal (228 A,B) oder zum Freigeben des kegelförmigen Grats und des kegelförmigen Kanals aus der abdichtenden Verbindung.

3. Rohrverbindung nach Anspruch 2, wobei die Vorrichtung zum wahlweisen absichernden Befestigen des kegelförmigen Grats in abdichtender Verbindung mit dem ringförmigen Kanal aufweist:
   - eine äußere Hülse (350);
   - einen auf der Innenfläche der äußeren Hülse angebrachten Zapfen (354);
   - eine an der Außenfläche der Dichtvorrichtung ausgebildete Nut (540), wobei die Teile bezütlich ihrer gemeinsamen Achse gegeneinander verdrehbar sind und wobei die Nut den Zapfen aufnehmen und ihn in einer Stellung festhalten kann, wenn die äußere Hülse bezüglich des Paßelements gedreht wird.

4. Rohrverbindungsaufbau nach Anspruch 2, wobei die Vorrichtung zum wahlweisen absichernden Befestigen eine drehbare, äußere Hülse (302, 304) aufweist, wobei diese äußere Hülse über ein Gewinde mit einem Paßelement (331) in Eingriff steht.

5. Rohrverbindungsaufbau nach Anspruch 2, welcher zwei Paßelemente aufweist und wobei die Vorrichtung zum wahlweisen absichernden Befestigen zwei äußere Hülsen (302, 304) aufweist, wobei jede äußere Hülse mit einem Paßelement in Eingriff steht und die äußeren Hülsen miteinander in Eingriff stehen.

6. Rohrverbindungsaufbau nach einem der Ansprüche 1 bis 5, welcher weiterhin eine Rückhaltevorrichtung (331) zum Verhindern der Freigabe der Vorrichtung zum wahlweisen absichernden Befestigen aufweist, so daß die abdichtende Verbindung zwischen dem kegelförmigen Grat und dem kegelförmigen Kanal gelöst wird, ehe die Gesamtkonstruktion völlig zerlegt wird.

7. Rohrverbindungsaufbau nach einem der Ansprüche 1 bis 6, wobei die Seiten (129 A,B) des Grats mit einem Winkel im Bereich von etwa 5° bis etwa 9° bezüglich der Mittelachse des Paßelements ausgerichtet sind, und wobei der ringförmige Kanal durch zwei flache, abgeschrägte Wände definiert wird, wobei die Wände in einem Winkel, der gleich dem Winkel ist, in dem die schrägen Gratseiten bezüglich der Mittelachse des Paßelements ausgerichtet sind, bezüglich einer zentralen Achse der Dichtvorrichtung angeordnet sind.

8. Rohrverbindungsaufbau nach Anspruch 7, wobei jede der Seiten (129 A,B) in einem Winkel im Bereich von etwa 6° bis etwa 7° bezüglich der Mittelachse angeordnet ist.

9. Rohrverbindungsaufbau nach einem der Ansprüche 1 bis 8, wobei die schrägen Gratseiten aus einem Werkstoff hergestellt sind, dessen Brinell-Härte-Wert im Bereich von etwa 5 Brinell-Einheiten bis etwa 200 Brinell-Einheiten liegt, im Unterschied zu dem Brinell-Härte-Wert des Werkstoffs, aus dem die schrägen Kanalwände gefertigt sind.

10. Rohrverbindungsaufbau nach Anspruch 9, wobei die schrägen Gratseiten aus einem Werkstoff hergestellt sind, dessen Brinell-Härte-Wert im Bereich von etwa 10 Brinell-Einheiten bis etwa 150 Brinell-Einheiten liegt, im Unterschied zu dem Brinell-Härte-Wert des Werkstoffs, aus dem die schrägen Kanalwände gefertigt sind.

11. Rohrverbindungsaufbau nach einem der Ansprüche 1 bis 10, wobei die Dichtvorrichtung aus einem Werkstoff hergestellt ist, der einen Wärmeausdehnungskoeffizienten aufweist, den der Werkstoff, aus dem das Paßelement gefertigt ist, aufweist.

12. Rohrverbindungsaufbau nach einem der Ansprüche 1 bis 10, geeignet für die Verwendung bei Tiefsttemperaturen, wobei die abdichtende Vorrichtung aus einem Werkstoff gefertigt ist, der einen Wärmeausdehnungskoeffizienten hat, der größer ist als der Wärmeausdehnungskoeffizient, den der Werkstoff hat, aus dem das Paßelement hergestellt ist, und ferner aus der starren Dichtvorrichtung zum Kompensielen der Wärmekontraktion der starren Dichtvorrichtung und dem Paßelement besteht, um bei Temperaturen, die niedriger als die Umgebungstemperatur der Anordnung sind, die starre Dichtvorrichtung in abdichtender Verbindung mit den Paßelementen zu halten.

13. Rohrverbindungsaufbain nach einem der Ansprüche 1 bis 11, der weiterhin eine Kompensiervorrichtung (320) zum Ausgleichen der Wärmekontraktion der starren Dichtvorrichtung und des Paßelements aufweist, um die Dichtvorrichtung bei Temperaturen, die niedriger als die Umgebungstemperatur der Anordnung sind, in abdichtender Verbindung mit dem Paßelement zu halten.

14. Rohrverbindungsaufbau nach einem der Ansprüche 1 bis 13, wobei die Vorrichtung zum Befestigen der starren Dichtvorrichtung mit einem ersten Ende an einem Rohrelement ein an dem Rohrelement befestigtes Paßelement aufweist.

15. Rohrverbindungsaufbau nach einem der Ansprüche 1 bis 14, wobei die Dichtvorrichtung ferner einen Kanal (754 A,B) aufweist, wobei dieser Kanal mit dem kegelförmigen Kanal in Verbindung staht.

FIG. 1

FIG. 2

EP 0 231 076 B1

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15